(19) Europäisches Patentamt
European Patent Office
Office européen des brevets

(11) Veröffentlichungsnummer: **0 030 663**
**B1**

(12) **EUROPÄISCHE PATENTSCHRIFT**

(45) Veröffentlichungstag der Patentschrift: **12.10.83**

(21) Anmeldenummer: **80107443.6**

(22) Anmeldetag: **28.11.80**

(51) Int. Cl.³: **C 08 F 259/08,** C 08 F 285/00, C 08 F 2/22 // (C08F259/08, 214/18),(C08F285/00, 214/18)

(54) **Fluorpolymere mit schalenmodifizierten Teilchen und Verfahren zu deren Herstellung.**

(30) Priorität: **12.12.79 DE 2949907**

(43) Veröffentlichungstag der Anmeldung: **24.06.81 Patentblatt 81/25**

(45) Bekanntmachung des Hinweises auf die Patenterteilung: **12.10.83 Patentblatt 83/41**

(84) Benannte Vertragsstaaten: **BE DE FR GB IT NL SE**

(56) Entgegenhaltungen:
DE-A-1 795 664
FR-A-2 015 217
FR-A-2 271 258
GB-A-1 574 975
US-A-4 036 802
US-A-4 134 995

(73) Patentinhaber: **HOECHST AKTIENGESELLSCHAFT, Postfach 80 03 20, D-6230 Frankfurt am Main 80 (DE)**

(72) Erfinder: **Kuhls, Jürgen, Dr., Unghausen 16a, D-8263 Burghausen/Salzach (DE)**
Erfinder: **Mayer, Franz, Dr., Ludwigshafener Strasse 3, D-8261 Burgkirchen/Alz (DE)**
Erfinder: **Fitz, Herbert, Dr., Kantstrasse 41, D-8261 Burgkirchen/Alz (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 030 663 B1**

ACTORUM AG

# Fluorpolymere mit schalenmodifizierten Teilchen und Verfahren zu deren Herstellung

Die Erfindung betrifft wässrige Dispersionen von Fluorpolymeren, enthaltend kolloidale Teilchen eines teilweise modifizierten Tetrafluorethylen-Polymerisats mit einem mehrschaligen Teilchenaufbau aus Schalen unterschiedlicher Zusammensetzung, die daraus durch Koagulation gewonnenen, für das Pastenextrusionsverfahren besonders geeigneten Fluorpolymeren-Harze sowie ein Verfahren zur Herstellung der genannten Fluorpolymeren-Dispersionen.

Pastenextrudierbare Tetrafluorethylen-Polymerisate werden im allgemeinen durch Emulsionspolymerisation hergestellt, da nur die daraus durch Koagulation gewonnenen Kornaggregate vermittels ihrer schneeballartigen Struktur und ihrer hohen inneren Oberfläche in der Lage sind, das für den Pastenextrusionsprozess erforderliche gleitmittel (üblicherweise ein höhersiedender Kohlenwasserstoff) in genügender Menge aufzunehmen (J. F. Lontz et al., Ind. Eng. Chem. *44*, Nr. 8, Seiten 1805 bis 1810). Der Pastenextrusionsprozess, mit dem insbesondere sehr dünnwandige Formkörper unter Anwendung hoher Reduktionsverhältnisse (Reduktionsverhältnis = Verhältnis des Querschnitts von Vorformzylinder zu Querschnitt des Extrudats) hergestellt werden, stellt jedoch nicht nur an die Verarbeitungswerkzeuge, sondern auch an die Qualität der eingesetzten Tetrafluorethylen-Polymerisate hohe Anforderungen, da schon kleine Verarbeitungs- und Materialfehler die Güte der Erzeugnisse ausserordentlich negativ beeinflussen, beispielsweise bezüglich Fehlstellen, die sich bei dünnwandigen Formkörpern in Form von Löchern und Rissen manifestieren oder die mechanischen und/oder die elektrischen Eigenschaften der Erzeugnisse verschlechtern.

Es sind daher schon eine ganze Reihe von Tetrafluorethylen-Polymerisaten entwickelt worden, die für die Herstellung von verbesserten Pastenextrudaten, möglichst unter Anwendung hoher Reduktionsverhältnisse bei der Extrusion, besonders geeignet sein sollen. Während reine Homopolymerisate des Tetrafluorethylens — auch solche, die unter Verwendung einer kolloidalen Saatvorlage aus vorgebildetem Polytetrafluorethylen bei der Emulsionspolymerisation des Tetrafluorethylens hergestellt worden sind — diesen Anforderungen in der Praxis kaum genügen, ist es bekannt, dass sogenannte Modifizierungsmittel, zugesetzt während der Polymerisation, die Pastenextrudierbarkeit verbessern können (US-PS 3142665). Als solche Modifizierungsmittel, die bei der Polymerisation des Tetrafluorethylens zugegen sind, kommen entweder regelnde jedoch nicht polymerisationsfähige Kettenübertragungsmittel wie beispielsweise Methanol in Frage, oder es werden mit besonderem Vorteil fluorierte, zur Copolymerisation mit Tetrafluorethylen befähigte Monomere wie beispielsweise Perfluorpropen, ein Perfluoralkylvinylether oder ein halogen- oder wasserstoff-substituiertes Fluorolefin, eingesetzt. Die Gesamtmenge dieses Comonomeren-Modifizierungsmittels ist dabei so gering zu bemessen, dass die speziellen Eigenschaften des reinen Polytetrafluorethylens erhalten bleiben (das heisst vor allem: keine Verarbeitungsmöglichkeit aus der Schmelze wegen der extrem hohen Schmelzviskosität, dafür aber herausragende Thermostabilität und inertes Verhalten auch gegenüber äusserst aggressiven Medien), im Gegensatz zum Einsatz höherer Mengen solcher Comonomeren bei der Polymerisation, die echte Tetrafluorethylen-Copolymerisate erbringt, welche nach thermoplastischen Formgebungsmethoden aus der Schmelze verarbeitet werden können, aber bestimmte erwünschte Eigenschaften des Polytetrafluorethylens (einschliesslich des modifizierten Polytetrafluorethylens) nicht mehr besitzen.

Im einzelnen ist bekanntgeworden, dass das Modifizierungsmittel während des gesamten Polymerisationsvorgangs zugegen ist, wodurch die gebildeten Teilchen eine durchgehend und weitgehend einheitliche Modifizierung aufweisen (US-PS 3142665, BE-PS 654084, US-PS 3951930, US-PS 3819594). Dabei sollen durch Auswahl spezieller Katalysatoren oder Dispergiermittel oder die Art ihrer Zugabe gewisse Verbesserungen erzielbar sein. Es ist auch schon versucht worden, modifiziertes Polytetrafluorethylen herzustellen, dessen Teilchen zwei Teilbereiche (Teilchenkern und Teilchenhülle) mit unterschiedlicher Modifizierung aufweisen, wobei dieser Unterschied qualitativer oder quantitativer Art sein kann, das heisst in beiden Teilbereichen können unterschiedliche Modifizierungsmittel anwesend sein (einschliesslich derjenigen Variante, dass einer von beiden Bereichen aus unmodifiziertem Polytetrafluorethylen besteht), und/oder das gleiche Modifizierungsmittel ist in den beiden Bereichen in unterschiedlicher Konzentration anwesend (US-PS 3142665, US-PS 3654210, US-PS 4038231, US-PS 4036802, US-PS 4134995). Solche Teilchen mit zwei unterschiedlich modifizierten Teilbereichen werden erhalten, indem entweder bei der Emulsionspolymerisation zur Herstellung dieser Tetrafluorethylen-Polymerisate eine kolloidale Saatpartikel enthaltende Dispersion vorgelegt wird, auf die dann ein qualitativ und/oder quantitativ unterschiedliches Monomerengemisch aus Tetrafluorethylen und Modifizierungsmittel (oder gegebenenfalls reines Tetrafluorethylen) „aufpolymerisiert" wird, oder die Polymerisation wird nach einem bestimmten Zeitpunkt unterbrochen und mit unterschiedlicher Monomeren-Zusammensetzung fortgesetzt. Auch spezielle Comonomeren-Modifizierungsmittel sind bereits verwendet worden, beispielsweise fluorierte Ringether (US-PS 4036802, US-PS 4058578), die jedoch speziellen Eigenschaftsverbesserungen dienen.

Mit allen diesen beschriebenen modifizierten Polytetrafluorethylen-Harzen konnten die Pastenextrusions-Eigenschaften in vieler Hinsicht

verbessert werden, jedoch ist die gleichförmige Extrudierbarkeit bei hohen Reduktionsverhältnissen immer noch nicht voll befriedigend, und es wird ferner angestrebt, den erforderlichen Extrusionsdruck bei gegebenem Reduktionsverhältnis weiter abzusenken, da hohe Drücke wegen der hohen Belastung der Verarbeitungswerkzeuge unerwünscht sind.

Ferner stellen die bekannten modifizierten Tetrafluorethylen-Harze Produkte dar, die auf die Pastenextrusion speziell zugeschnitten sind. Die Pastenextrusions-Verarbeitung ist jedoch innerhalb der gesamten Polytetrafluorethylen-Verarbeitung ein relativ begrenztes Gebiet. Daher wird weiterhin angestrebt, solchen Pastenextrusions-Polytetrafluorethylen-Harzen beziehungsweise den bei der Emulsionspolymerisation anfallenden Primärdispersionen eine Kombination von Eigenschaften zu verleihen, die sie auch für andere Anwendungsgebiete, wie zum Beispiel für die üblicherweise den Suspensionspolymerisaten vorbehaltene Ram-Extrusion und Press-Sinter-Verarbeitung, für die Beschichtung mit Hilfe wässriger Dispersionen und für die Erzeugung von Bändern und Folien, welche mit hohen Reckverhältnissen und Reckgeschwindigkeiten zu porösen Gebilden verformt werden können, in hohem Masse geeignet machen.

Für die genannten Bedürfnisse stellt die vorliegende Erfindung verbesserte wässrige Fluorpolymeren-Dispersionen, enthaltend kolloidale Teilchen eines teilweise modifizierten Tetrafluorethylen-Polymerisats mit einem mehrschaligen Teilchenaufbau aus Schalen unterschiedlicher Zusammensetzung (wobei im folgenden unter dem Begriff der einzelnen „Schale" sowohl der Teilchenkern als auch die beiden Teilchenhüllen verstanden werden sollen), und die daraus durch Koagulation entstehenden, pulverförmigen Fluorpolymeren-Harze zur Verfügung. Die genannten Fluorpolymeren-Dispersionen sind dadurch gekennzeichnet, dass deren Teilchen bestehen aus

a) einem Teilchenkern, bestehend aus einem Polymerisat aus 0,05 bis 6 Gew.-% Einheiten mindestens eines modifizierenden, fluorolefinischen Comonomeren der Formeln

a$^1$) 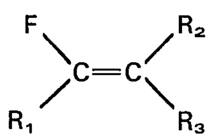 , 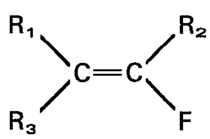 ,

worin:

$R_1$ = H, Br, Cl;

$R_2$ = $R_f^1$, wobei $R_f^1$ einen Perfluoralkylrest mit 1 bis 4 C-Atomen bedeutet;

$R_3$ = $R_1$ oder $R_2$ ist;

a$^2$) 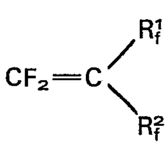 ,

worin $R_f^1$ ein Perfluoralkylrest mit 1 bis 4 C-Atomen und $R_f^2$ F oder Perfluormethylrest ist;

a$^3$) $R_f^3-O-CF=CF_2$, worin $R_f^3$ ein Perfluoralkylrest mit 1 bis 5 C-Atomen ist; oder

a$^4$) $R_4-O-CF=CF_2$,

worin $R_4$ ein Rest $XCF_2-(CH_2-(CF_2)_m-$, wobei X=H oder Cl und m eine ganze Zahl von 0 bis 4 bedeutet, ist,

und Einheiten des Tetrafluorethylens, wobei der Anteil des Teilchenkerns 2 bis 60 Gew.-% des Gesamtteilchens beträgt,

b) einer unmittelbar an den Teilchenkern anschliessenden inneren Teilchenhülle aus einem Polymerisat, bestehend ausschliesslich aus Tetrafluorethylen-Einheiten, und

c) einer unmittelbar an die innere Teilchenhülle anschliessenden äusseren Teilchenhülle aus einem Polymerisat, bestehend aus 0,1 bis 15 Gew.-% Einheiten mindestens eines modifizierenden, fluorolefinischen Comonomeren der Formeln a$^1$), a$^2$), a$^3$) und a$^4$), worin diese Formeln die unter a) definierte Bedeutung haben, und Einheiten des Tetrafluorethylens, wobei das Gewichtsverhältnis von innerer zu äusserer Teilchenhülle 25:75 bis 99,5:0,5 beträgt.

Unter den durch die Formeln a$^1$) umfassten Comonomeren sollen jeweils auch die möglichen Stereoisomeren (cis- oder trans-Isomeren) verstanden werden.

Von den im Teilchenkern neben Tetrafluorethylen-Einheiten enthaltenen Comonomeren sind als bevorzugt zu nennen:

a$^1$) 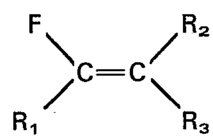 , 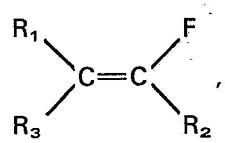 ,

worin:

$R_1$ = H oder Cl;

$R_2$ = F oder $CF_3$; und

$R_3$ = F oder $CF_3$ ist;

oder worin:

$R_1$ = H oder Cl;

$R_2$ = F; und

$R_3$ = $C_2F_5$ ist.

Solche bevorzugte Comonomere sind beispielsweise Trifluorethylen, Pentafluorpropen, Heptafluorbuten, Heptafluorisobuten, Trifluorchlorethylen, Chlorpentafluorpropen, Chlorheptafluorbuten, Chlorheptafluorisobuten. Speziell bevorzugt aus dieser Gruppe sind das Trifluorchlorethylen und Trifluorethylen.

Weiterhin sind bevorzugte Comonomere, die im Teilchenkern enthalten sein können, diejenigen der vorstehenden Formeln a$^1$), worin:

$R_1$ = H oder Cl;

$R_2$ = F, $CF_3$ oder $C_2F_5$;

$R_3$ = H oder Cl

ist.

Als solche Comonomere sind beispielsweise zu nennen Difluorethylen, Dichlordifluorethylen, Chlordifluorethylen, Tetrafluorpropen, Chlortetrafluorpropen, Chlorhexafluorbuten und -isobuten. Besonders hervorzuheben aus dieser Gruppe ist das 1,1-Difluorethylen(Vinylidenfluorid).

Weiterhin bevorzugte, im Teilchenkern neben

Tetrafluorethylen-Einheiten enthaltene Comonomeren sind diejenigen der Formel

a²)

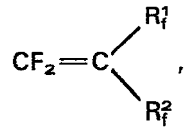

worin $R_f^1$ $CF_3$, $C_2F_5$ und $R_f^2$ $CF_3$ oder vorzugsweise F ist. Dies sind beispielsweise Perfluorpropen, Perfluor-1-buten, Perfluorisobuten. Speziell bevorzugt ist das Perfluorpropen. Als weitere bevorzugte Comonomere für die Modifizierung des Teilchenkerns sind zu nennen diejenigen der Formel

$$a^3)\ R_f^3-O-CH=CF_2,$$

worin $R_f^3$ ein Perfluoralkylrest mit 1 bis 3 C-Atomen, speziell bevorzugt aber der Perfluor-n-propyl-Rest ist.

Weitere geeignete Comonomere, die als modifizierende, fluorolefinische Monomeren-Einheiten in den Teilchenkern eingebaut sein können, sind ferner polyfluorierte Ether der Formel

$a^4)$ $R_4-O-CF=CF_2$, worin $R_4$ ein Rest der Formel $XCF_2-(CF_2)_m-$ (m=ganze Zahl von 0 bis 4, X=H oder Cl) ist.

Der Anteil an diesen modifizierenden fluorolefinischen Comonomeren, der im modifizierten Emulsionspolymerisat, das den Teilchenkern ausmacht, enthalten ist, beträgt 0,05 bis 6 Gew.-%, vorzugsweise 0,1 bis 5 Gew.-%, an deren eingebauten Einheiten. Die restlichen eingebauten Einheiten, ergänzt auf 100 Gew.-%, sind solche des Tetrafluorethylens. Der Comonomerenanteil kann auch aus Gemischen von 2 oder mehr der genannten fluorolefinischen Verbindungen bestehen.

Die sich an diesen Teilchenkern unmittelbar anschliessende innere Teilchenhülle besteht ausschliesslich aus Einheiten des Tetrafluorethylens, das heisst, sie ist ein Homopolymerisat dieses Monomeren, hergestellt durch Polymerisation in wässriger Emulsion.

An diese innere, aus Polytetrafluorethylen bestehende Teilchenhülle schliesst sich unmittelbar eine äussere Teilchenhülle an. Diese wird gebildet aus einem Polymerisat, bestehend aus Einheiten mindestens eines modifizierenden, fluorolefinischen Comonomeren der obengenannten Formeln a¹), a²), a³) und a⁴), worin $R_f^1$, $R_f^2$, $R_f^3$, $R_1$, $R_2$, $R_3$, $R_4$, m und n die obengenannte Bedeutung haben, sowie aus Einheiten des Tetrafluorethylens.

Bevorzugte Comonomere, die den modifizierenden Anteil in der äusseren Teilchenhülle ausmachen, sind in erster Linie solche in den obengenannten vorzugsweisen und speziell bevorzugten Bedeutungen bezüglich des Teilchenkerns a). In der äusseren Teilchenhülle können zur Modifizierung ebenfalls Gemische aus 2 und mehr der genannten fluorolefinischen Comonomeren anwesend sein.

Der Anteil an diesen fluorolefinischen Comonomeren, der in dem modifizierten Emulsionspolymerisat, das die äussere Teilchenhülle ausmacht, enthalten ist, beträgt 0,1 bis 15 Gew.-%, vorzugsweise 0,1 bis 12 Gew.-%, insbesondere 0,1 bis 10 Gew.-%, an deren eingebauten Einheiten. Die restlichen Einheiten des Polymerisats, ergänzt auf 100 Gew.-%, sind solche des Tetrafluorethylens. Unter der Bezeichnung „unmittelbar anschliessend" soll hier verstanden werden, dass die einzelnen Schalen, das heisst der Teilchenkern, die innere und die äussere Teilchenhülle ein einheitliches Gesamtteilchen bilden, wobei diese Schalen durch den Polymerisationsvorgang untrennbar miteinander verbunden sind.

Der Anteil des Teilchenkerns an diesem Gesamtteilchen beträgt 2 bis 60 Gew.-%, vorzugsweise 5 bis 50 und insbesondere 5 bis 20 Gew.-%. Das Gewichtsverhältnis von innerer zu äusserer Teilchenhülle beträgt 25:75 bis 99,5:0,5.

Innerhalb des erfindungsgemässen Rahmens können die Fluorpolymeren-Dispersionen mit dreischaligem Teilchenaufbau für den jeweiligen Verwendungszweck gewissermassen „massgeschneidert" werden, indem durch kleine Veränderungen der Zusammensetzung oder der Herstellungsbedingungen, vor allem aber durch Variation des Ausmasses der inneren Teilchenhülle, innerhalb der angegebenen Grenzen eine gezielte und optimale Anpassung der Eigenschaften erreicht wird. So sind für die Verarbeitung nach der Press-Sinter-Technik und nach dem Verfahren der Ram-Extrusion diejenigen Produkte (nach Behandlung mittels der weiter unten beschriebenen Fällungsgranuliertechnik) besonders geeignet, die die im Teilchenkern und in der äusseren Hülle perfluorierten Comonomeren der obengenannten Gruppen a²) und a³), insbesondere Perfluorpropen und Perfluor(propylvinyl)ether enthalten. Bei diesen Produkten ist vorzugsweise das Gewichtsverhältnis von innerer zu äusserer Teilchenhülle 25:75 bis 75:25. Für die Verwendung nach dem Pastenextrusionsverfahren (Strang- und Drahtextrusion) und für die Herstellung hochgradig verstreckbarer, ungesinterter Bänder eignen sich prinzipiell alle Produkte, besonders aber diejenigen, bei denen das Gewichtsverhältnis von innerer zu äusserer Teilchenhülle 75:25 bis 99,5:0,5, vorzugsweise 80:20 bis 99,5:0,5, beträgt. Diese stellen eine bevorzugte Ausführungsform der Erfindung dar. Hierbei können im Teilchenkern und der äusseren Hülle die genannten Comonomeren der Gruppen a¹) bis a⁴) anwesend sein.

Die vorstehenden Angaben über die Zusammensetzung des Teilchenkerns, der inneren und der äusseren Teilchenhülle gelten mit der Massgabe, dass das aus den Gesamtteilchen gebildete Polymerisat aus der Schmelze (nach üblichen Verarbeitungsmethoden für Thermoplaste) nicht verarbeitbar ist, das heisst, es besitzt eine Schmelzviskosität (Scherviskosität) von $\geqslant$ 0,1 GPas, gemessen nach der Methode (Kriechtest) von Ajroldi et al., beschrieben in J. appl. Polym. Sci. *14*, 1970, Seite 79 ff. Eine genaue experimentelle Beschreibung der Methode ist angegeben in UP-PS 4036802, Spalte 9, Zeile 46, bis Spalte 10, Zeile 41. Sie wurde hier mit folgenden Änderungen durchgeführt:

Dehnungsmessung bei 350° C, Prüfkörper mit 0,25 cm Breite, 0,65 cm Dicke und 3,5 cm gemessener Länge vor der Dehnung bei Raumtemperatur.

Die vorliegende Erfindung umfasst weiterhin ein Verfahren zur Herstellung von wässrigen Fluorpolymeren-Dispersionen, enthaltend kolloidale Teilchen eines teilweise modifizierten Tetrafluorethylen-Polymerisats mit einem mehrschaligen Teilchenaufbau aus Schalen unterschiedlicher Zusammensetzung durch Emulsionspolymerisation von Tetrafluorethylen mit modifizierenden, fluorolefinischen Comonomeren, die mit Tetrafluorethylen copolymerisierbar sind, in Gegenwart von üblichen Katalysatoren und Emulgatoren. Dieses Verfahren ist dadurch gekennzeichnet, dass

A) zunächst eine kolloidale Saatdispersion mit einem Polymerisat-Feststoffgehalt von 3 bis 18 Gew.-%, bezogen auf das Gesamtgewicht der wässrigen Saatdispersion, durch Emulsionspolymerisation des Tetrafluorethylens und mindestens eines modifizierenden, fluorolefinischen Comonomeren der Formeln

$a^1$) 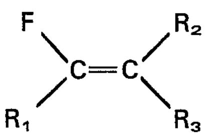 , 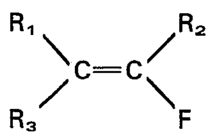 ,

worin

$R_1$ = H, Br, Cl;

$R_2$ = F, $R_f^1$, wobei $R_f^1$ einen Perfluoralkylrest mit 1 bis 4 C-Atomen bedeutet;

$R_3$ = $R_1$ oder $R_2$ ist;

$a^2$) 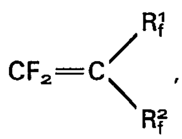 ,

worin $R_f^1$ ein Perfluoralkylrest mit 1 bis 4 C-Atomen und $R_f^2$ F oder ein Perfluormethylrest ist;

$a^3$) $R_f^3-O-CF=CF_2$,

worin $R_f^3$ ein Perfluoralkylrest mit 1 bis 5 C-Atomen ist; oder

$a^4$) $R_4-O-CF=CF_2$,

worin $R_4$ ein Rest $XCF_2-(CF_2)_m-$, wobei X=H oder Cl und m eine ganze Zahl von 0 bis 4 bedeutet, ist, hergestellt wird, wobei die Menge dieses fluorolefinischen Comonomeres so zu bemessen ist, dass der Anteil seiner Einheiten in den gebildeten Saatpartikeln 0,05 bis 6 Gew.-% beträgt;

B) sodann die Emulsionspolymerisation in Gegenwart dieser kolloidalen Saatdispersion aus Stufe A), gegebenenfalls nach Herabsetzung des Feststoffgehaltes durch Verdünnen, durch Aufpressen und Zuführung von Tetrafluorethylen unter Aufrechterhaltung eines Druckes von 5 bis 30 bar so lange fortgesetzt wird, bis ein Feststoffgehalt der Enddispersion von 8 bis 40 Gew.-% erreicht ist, wobei die Menge der anwesenden kolloidalen Saatdispersion so bemessen ist, dass die aus den Saatpartikeln entstehenden Teilchenkerne 2 bis 60 Gew.-% der Teilchen der Enddispersion ausmachen, und dabei

C) in die laufende Emulsionspolymerisation der Stufe B) bei Erreichen eines Umsetzungsgrades im Bereich von 25 bis 99,5 Gew.-%, bezogen auf den Tetrafluorethylen-Verbrauch bis zum angestrebten Feststoffgehalt der Enddispersion, mindestens ein modifizierendes, fluorolefinisches Comonomeres der Formeln $a^1$), $a^2$), $a^3$) und $a^4$), worin diese Formeln die unter A) definierte Bedeutung haben, in einer Menge zugeschleust wird, dass der Anteil seiner Einheiten in der sich Bildenden äusseren Teilchenhülle 0,1 bis 15 Gew.-% beträgt.

Die einzelnen Stufen A), B) und C) des erfindungsgemässen Verfahrens werden wie folgt durchgeführt:

Zunächst wird in Stufe A) nach an sich bekannten Methoden der Emulsionspolymerisation des Tetrafluorethylens eine Saatdispersion hergestellt. Die Emulsionspolymerisation erfolgt in wässriger Phase, wobei mindestens eines der modifizierenden, fluorolefinischen Comonomeren der Formeln $a^1$), $a^2$), $a^3$) und $a^4$) gemäss den oben gegebenen Definitionen (oder ein Gemisch solcher Comonomeren) in einer Menge anwesend ist, dass der Anteil der eingebauten Einheiten dieser Comonomeren in den bei der Emulsionspolymerisation gebildeten Partikeln 0,05 bis 6 Gew.-%, vorzugsweise 0,1 bis 5 Gew.-%, ausmacht (Rest gegen 100 Gew.-% sind die Einheiten des Tetrafluorethylens). Wegen der unterschiedlichen Polymerisationsgeschwindigkeiten von Tetrafluorethylen einerseits und der modifizierenden, fluorolefinischen Comonomeren andererseits ist es erforderlich, dass diese fluorolefinischen Verbindungen in einem höheren Anteil der Monomerphase anwesend sind als es ihrem Anteil an eingebauten Einheiten im Saatpolymerisat-Partikel (Teilchenkern) entspricht. Dieser erforderliche Überschuss hängt ab von der Art des eingesetzten Comonomeren und damit von dessen Polymerisationsgeschwindigkeit, die dem Fachmann bekannt ist. Für die genannten Gruppen $a^1$) bis $a^4$) beträgt dieser Überschuss (das heisst die Menge an modifizierenden Comonomeren, bezogen auf die zu verbrauchende Menge an Tetrafluorethylen gleich 100 bis zum angestrebten Feststoffgehalt) etwa das 1,05fache bis 12fache, vorzugsweise etwa das 1,05fache bis 10fache, der im Saatpolymerisat eingebauten Menge in Gew.-%. Speziell für Perfluorpropen soll dieser Überschuss etwa das 2- bis 9fache, vorzugsweise das 2,5- bis 7fache, für Perfluor(propylvinyl)ether das 3- bis 12fache, vorzugsweise das 4- bis 10fache, und für Chlortrifluorethylen und Vinylidenfluorid das 1,05- bis 2fache, vorzugsweise das 1,05- bis 1,5fache, betragen.

Die Dosierung des monomeren Tetrafluorethylens erfolgt nach Erreichen des jeweiligen Polymerisationsdrucks über eine geeignete Mess- und Regelvorrichtung, wobei durch Nachführen von Tetrafluorethylen dieser Druck aufrechterhalten und die eingegebene Menge angezeigt wird. Bei Erreichen der für den jeweils angestrebten, vorgegebenen Feststoffgehalt der Saatdispersion erforderlichen Zuführungsmenge an Tetrafluorethylen wird die Polymerisation durch Entspannen abgebrochen. Die Dosierung des modifizierenden

Comonomeren erfolgt in der erforderlichen Menge bezogen auf diesen Tetrafluorethylenverbrauch und zwar vorzugsweise der Gesamtmenge vor Beginn der Polymerisation. Die Nachschleusung von Teilmengen ist möglich, jedoch ist dafür Sorge zu tragen, dass zu jedem Zeitpunkt eine ausreichende Menge Modifizierungsmittel anwesend ist.

Die Emulsionspolymerisation zur Herstellung der Saatdispersion gemäss Stufe A) erfolgt in wässriger Phase bei üblichen Drücken von 5 bis 30, vorzugsweise 8 bis 16 bar, sowie bei Temperaturen von 10 bis 70° C, vorzugsweise von 20 bis 40° C, in Gegenwart von für die Emulsionspolymerisation von Fluorolefinen üblichen wasserlöslichen, radikalbildenden Katalysatoren, die telogen möglichst inaktiv sein sollen. Dies können wasserlösliche, peroxidische Verbindungen sein, wie anorganische oder organische Peroxide, Diacylperoxide oder Persäuren einschliesslich deren wasserlöslichen Salzen, wie beispielsweise die Perborate, Percarbonate und insbesondere Persulfate (vorzugsweise Alkali- oder Ammoniumsalze).

Bevorzugt sind wasserlösliche Redox-Initiator-Systeme, also Kombinationen aus einer der genannten peroxidischen Verbindungen und einer reduzierenden Komponente, wie beispielsweise einem wasserlöslichen Disulfit, Thiosulfat, Dithionit, Hydrogensulfit oder Sulfinat oder auch einer Diimin liefernden Verbindung wie Azodicarbonsäure und deren Salze oder Azodicarbonamid. Bevorzugte Redox-Initiator-Systeme sind Kombinationen von Alkali- oder Ammoniumpersulfat mit Alkalidi- oder -hydrogensulfit.

Ferner können mit Vorteil auch Ammonium-, Alkali- und Erdalkalisalze der Permangansäure, Mangansäure oder manganigen Säure, insbesondere Kaliumpermanganat, als Initiatoren Verwendung finden.

Die Katalysatormengen liegen in dem für die Emulsionspolymerisation von Fluorolefinen üblichen Rahmen. Sie betragen 0,00005 bis 0,1 Gew.-%, vorzugsweise 0,0005 bis 0,03 Gew.-%, bezogen auf das wässrige Polymerisationsmedium (wobei im Falle von Redox-Systemen die oxidierende Komponente gemeint ist). Mit Vorteil bedient man sich bei Redox-Systemen auch des bekannten Zusatzes von geringen Mengen von Cokatalysatoren, beispielsweise von wasserlöslichen Salzen des Kupfers, Eisens oder Silbers.

Die Polymerisation wird in üblicher Weise in den bei der Emulsionspolymerisation von Fluorolefinen eingehaltenen pH-Bereich durchgeführt, der sich nach der Art des eingesetzten Initiators richtet und im Bereich von 4 bis 9 liegt. Bekannte Puffersubstanzen können zugegen sein.

Ferner werden für die Emulsionspolymerisation in der Stufe A) des erfindungsgemässen Verfahrens Emulgatoren eingesetzt, wie sie für die Emulsionspolymerisation des Tetrafluorethylens üblich und gebräuchlich sind und wie sie beispielsweise in der US-PS 2559752 beschrieben sind. Beispielsweise seien genannt die Alkali- und Ammoniumsalze von längerkettigen Perfluorcarbonsäuren, ω-Hydroperfluorcarbonsäuren, Chlorfluorcarbonsäuren, Perfluordicarbonsäuren sowie auch Perfluorsulfonsäuren und Perfluorphosphonsäuren. Bevorzugt besitzen solche Emulgatoren eine Kohlenstoffkette von 6 bis 12 C-Atomen. Bevorzugte Emulgatoren im Rahmen des erfindungsgemässen Verfahrens sind die Ammoniumsalze der ω-Hydroperfluoroctansäure und insbesondere der Perfluoroctansäure. Salze der Perfluorpropoxypropionsäure seien als ein weiteres Beispiel für eine Klasse von gut wirksamen Emulgatoren erwähnt.

Die genannten Emulgatoren können gegebenenfalls auch in Form der freien Säuren eingesetzt und mit Ammoniak neutralisiert werden. Die eingesetzten Emulgatoren sollen möglichst telogen inaktiv sein.

Die Mengen an Emulgator liegen in dem für die Emulsionspolymerisation von Fluorolefinen üblichen Rahmen. Sie betragen etwa 0,02 bis 0,5 Gew.-%, vorzugsweise etwa 0,05 bis 0,3 Gew.-%, bezogen auf das wässrige Polymerisationsmedium.

Die Emulsionspolymerisation zur Gewinnung dieser kolloidalen Saatdispersionen in Stufe A) wird so lange fortgesetzt, bis eine wässrige Saatdispersion mit einem Feststoffgehalt von 3 bis 18 Gew.-%, vorzugsweise von 5 bis 15 Gew.-%, bezogen auf das Gesamtgewicht der erhaltenen wässrigen Fluorpolymeren-Dispersion, gebildet ist. Der Umwandlungspunkt der kristallinen Phase der Fluorpolymerisat-Partikel dieser Saatdispersion liegt bei 290 bis 322° C, vorzugsweise bei 300 bis 317° C. Die hergestellte Saatdispersion enthält überwiegend sphärisch geformte, gleichmässig grosse Fluorpolymerisat-Partikel mit kolloidalem Teilchengrössenbereich (mittlerer Durchmesser von 0,01 bis 0,2 µm, vorzugsweise 0,03 bis 0,15 µm).

In der Verfahrensstufe B) wird die Emulsionspolymerisation mit dieser gemäss Stufe A) hergestellten kolloidalen Saatdispersion fortgesetzt. Diese Fortsetzung kann so erfolgen, dass die in einem getrennten Arbeitsgang hergestellte Saatdispersion A) im Reaktionsgefäss vorgelegt wird, wobei die für die Stufe B) (unter Einschluss von Stufe C) erforderliche Menge an Katalysator und Emulgator sowie gegebenenfalls an weiteren Polymerisationshilfsstoffen vor der Fortsetzung der Emulsionspolymerisation, zweckmässig in Form von wässrigen Lösungen, zugegeben wird. Die Zugabe dieser Polymerisations-Ingredienzien kann hier ebenso wie in Stufe A) auch so vorgenommen werden, dass eine Teilmenge vorgelegt und die erforderliche Restmenge im Verlauf der jeweiligen Polymerisation (Stufe A oder B + C) chargenweise oder kontinuierlich in das Gefäss über geeignete Zuleitungen nachgeschleust wird. Ebenfalls ist eine kontinuierliche Zugabe während des gesamten Polymerisationsprozesses (A+B+C) möglich.

Die Fortsetzung der Emulsionspolymerisation der Stufe A) kann jedoch auch so erfolgen, dass nach deren Beendigung eine Zwischenentspannung unter Entfernung der Monomerenphase vorgenommen wird und dann Tetrafluorethylen aufgepresst und die Emulsionspolymerisation erneut gestartet wird. Hierbei wird zweckmässig die Gesamtmenge an Katalysator und Emulgator und gegebenenfalls anderen Hilfsstoffen für die Stufe B), einschliesslich C) bereits bei Beginn der Stufe A) zugegeben. Es ist aber auch möglich, wie vorstehend beschrieben, eine Nachschleusung in Teilmengen oder kontinuierlich vorzunehmen.

Die zu Beginn der Stufe B) anwesende Menge an Saatdispersion aus Stufe A) ist so zu bemessen, dass die darin enthaltenen Saatpartikel, die die Teilchenkerne der entstehenden dreischaligen Gesamtteilchen bilden, 2 bis 60 Gew.-%, vorzugsweise 5 bis 55 Gew.-%, insbesondere 5 bis 50 Gew.-%, der Teilchen der Enddispersion, das heisst der dreischaligen Gesamtteilchen ausmachen. Diese Bemessung erfolgt durch eine entsprechend dem jeweils angestrebten Feststoffgehalt der Enddispersion (also des Produkts von Stufe B + C) vorgelegte Menge an Saatfeststoff und durch dosierte und gemessene Zugabe von Tetrafluorethylen (einschliesslich der zugeschleusten fluorolefinischen Comonomeren der Stufe C) während des Polymerisationsschritts B) und Abbruch der Polymerisation durch Entspannung bei Erreichung des Feststoffgehalts der Enddispersion.

Die zu Beginn der Stufe B) anwesende wässrige Saatdispersion gemäss A) wird gegebenenfalls mit Wasser verdünnt, so dass der Anfangsfeststoffgehalt 0,5 bis 15 Gew.-%, vorzugsweise 1 bis 10 Gew.-%, beträgt. Die Emulsionspolymerisation der Stufe B) (einschliesslich C) wird bis zu einem Feststoffgehalt von 8 bis 40 Gew.-%, vorzugsweise von 12 bis 30 Gew.-% und insbesondere von 15 bis 25 Gew.-%, der anfallenden Enddispersion geführt. In diese laufende Emulsionspolymerisation von Tetrafluorethylen der Stufe B) wird nun gemäss C) bei Erreichen eines Umsetzungsgrades im Bereich von 25 bis 99,5 Gew.-% ein modifizierendes, fluoriertes Comonomeres der Formeln $a^1$), $a^2$), $a^3$) oder $a^4$) oder ein Gemisch solcher Comonomeren zudosiert. Dabei kann, wie oben bezüglich des Verhältnisses von innerer zu äusserer Hülle beschrieben, für bestimmte Verwendungszwecke eine Zudosierung im Bereich von 25 bis 75% zweckmässig sein, bevorzugt ist die Zudosierung im Bereich von 75 bis 99,5%, speziell im Bereich 80 bis 99,5%. Der genannte Umsetzungsgrad ergibt sich aus dem Verbrauch an Tetrafluorethylen in Stufe B+C, bezogen auf denjenigen Verbrauch, der dem angestrebten Feststoffgehalt der Enddispersion entspricht. Er kann, wie oben beschrieben, mit einer entsprechenden Mess- und Regelvorrichtung festgestellt werden.

Bezüglich der in Stufe C) vorzugsweise eingesetzten Comonomeren gelten die obenstehenden Angaben über bevorzugte Comonomere in der äusseren Teilchenhülle.

Um den angestrebten Anteil an modifizierenden fluorierten Comonomeren von 0,1 bis 15 Gew.-%, vorzugsweise von 0,1 bis 12 Gew.-%, insbesondere von 0,1 bis 10 Gew.-%, an eingebauten Einheiten in der äusseren Teilchenhülle zu erreichen, wird die erforderliche Menge dieses modifizierenden Comonomeres in Stufe C) zugeschleust, und zwar vorzugsweise in der gesamten Menge bei Erreichen des entsprechenden Umsetzungsgrades. Es ist jedoch auch möglich, bei diesem Umsetzungsgrad eine Teilmenge zuzugeben und weitere Teilmengen im verbleibenden Zeitraum bis zum Abbruch der Polymerisation nachzudosieren. Der Überschuss an modifizierenden fluorolefinischen Comonomeren (angegeben als Faktor von in Stufe C) eingesetztem Comonomeren in Gew.-%, bezogen auf Tetrafluorethylen-Verbrauch in Stufe C)=100, über den Gew.-%-Anteil seines Einbaus in der äusseren Teilchenhülle) ist im allgemeinen etwas höher zu bemessen als bei Stufe A), insbesondere wenn die Zuschleusung bei höheren Umsetzungsgraden erfolgt. Er soll je nach Art des modifizierenden fluorolefinischen Comonomeren etwa das 1,1fache bis 40fache, vorzugsweise das 1,1- bis 30fache des einzubauenden Anteils betragen. Insbesondere für Chlortrifluorethylen und Vinylidenfluorid soll dieser Überschuss etwas das 1,1- bis 5fache, vorzugsweise das 1,1- bis 3fache, für Perfluorpropen etwa das 3- bis 30fache, vorzugsweise das 3- bis 25fache, und für Perfluor(propylvinyl)ether etwa das 8- bis 40fache, vorzugsweise das 10- bis 30fache sein. Erfolgt die Zuschleusung des modifizierenden Comonomeren bei Umsetzungsgraden von 75% und höher, so gilt dies mit der Massgabe, dass die Zugabe an modifizierendem Comonomer bis zu 500 Gew.-%, vorzugsweise bis zu 200 Gew.-%, der noch zum Verbrauch anstehenden Tetrafluorethylen-Menge betragen kann.

Die Zugabe des Tetrafluorethylens wird auch in Stufen B) und C) mit einer Mess- und Regelvorrichtung, wie oben beschrieben, gesteuert und quantitativ verfolgt.

Die Emulsionspolymerisation in Stufen B) und C) erfolgt unter den gleichen Polymerisationsbedingungen, wie sie oben (einschliesslich der Vorzugsangaben) für die Stufe A) beschrieben wurden. Dies gilt insbesondere hinsichtlich der Bereiche für den Polymerisationsdruck, für die Polymerisationstemperatur, für den pH-Wert sowie auch für die Art und Menge der eingesetzten Katalysatoren und Emulgatoren. Bezüglich der Katalysatormenge empfiehlt es sich jedoch, im unteren Teil des angegebenen Bereichs zu bleiben (etwa 0,00005 bis 0,001 Gew.-%, bezogen auf wässriges Medium), falls die Zuschleusung des modifizierenden, fluorolefinischen Comonomeren bei einem Umsetzungsgrad von 75% und Höher erfolgt.

Mit Vorteil werden dem wässrigen Polymerisationsmedium für die Stufen B) und C) in kleinen Mengen Mittel zur Stabilisierung der sich bildenden kolloidalen Dispersionen zugegeben. Als solche Dispersions-Stabilisierungsmittel können Terpen-Kohlenwasserstoffe, insbesondere ungesättigte cyclische Terpen-Kohlenwasserstoffe und deren sauerstoffhaltige Derivate, wie beschrieben in der US-PS 3707519, eingesetzt werden. Beispielsweise seien hier genannt Terpinen, Pinen, Dipenten, Camphen, Terpineol und Campher oder Gemische solcher Terpene, wie sie beispielsweise unter dem Warenzeichen Depanol® oder „Terpen

B" im Handel sind. Vorzugsweise geeignet als solche Dispersions-Stabilisierungsmittel sind nicht polymerisierbare, Etherbrücken enthaltende organische Verbindungen, die mindestens eine Etherbrücke im Molekül besitzen sowie ausser Kohlenstoff und Wasserstoff noch polare, funktionelle Gruppen im Molekül enthalten können, wie beispielsweise Hydroxyl-, Carboxyl-, Ester- oder Amidgruppen. Die genannten, Etherbrücken enthaltenden Verbindungen sollen zumindest zu 20 Gew.-%, vorzugsweise zu 50 Gew.-% und mehr in Wasser löslich sein. Beispiele solcher Etherbrükken enthaltender Verbindungen sind die Polyethylenglykole wie vorzugsweise Diethylenglykol und Triethylenglykol, welche bis zu hochmolekularen Gliedern dieser homologen Reihe gut wasserlöslich sind, ferner die Polypropylenglykole, wie Di- und Tripropylenglykol, welche etwa bis zum Molekulargewicht 600 ausreichend wasserlöslich sind, sowie ferner wasserlösliche gemischte Polyglykole aus Einheiten des Ethylen- und Propylenoxids. Weiterhin sind zu nennen die entsprechend wasserlöslichen Alkyl-, Alkylaryl- und Arylether (Monoether und Diether) des Ethylenglykols und Propylenglykols sowie der vorstehend genannten Polyglykole, beispielsweise Ethylenglykolmonomethylether, -monobutylether und -diethylether, sowie ferner Nonylphenolpolyglykolether und Triisobutylphenolpolyglykolether. Geeignete Verbindungen mit polaren, funktionellen Gruppen im Molekül sind auch die Polyglykolester, beispielsweise die Diethylenglykolmono- und -diester von Fettsäuren sowie die Polyoxalkylate von Fettaminen. Der Einsatz solcher Verbindungen ist bekannt aus der CA-PS 824195. Ferner sind insbesondere von bevorzugtem Interesse als Dispersions-Stabilisierungsmittel cyclische Ether mit 5 oder 6 Ringgliedern wie zum Beispiel 1,3,5-Trioxan, 1,3-Dioxolan, 2-Methyl- und 2,2-Dimethyldioxolan und besonders bevorzugt 1,3- und 1,4-Dioxan sowie Tetrahydrofuran.

Die genannten Dispersions-Stabilisierungsmittel werden in Mengen von 1 bis 40, vorzugsweise 5 bis 30 Gewichtsteilen je Million Gewichtsteile wässriges Polymerisationsmedium zugegeben, und zwar entweder in ihrer Gesamtmenge zu Beginn der Stufe B) vorgelegt oder kontinuierlich oder chargenweise während der Stufe B) (vor Beginn von C) nachgeschleust, oder besonders bevorzugt in ihrer Gesamtmenge ungefähr bei Beginn der Zuschleusung des modifizierenden fluorolefinischen Comonomeren (das heisst zu Beginn der Stufe C) zugegeben.

Als weitere Polymerisationshilfsmittel können in allen Stufen dieses Emulsionspolymerisations-Verfahrens bekannte Antikoagulationsmittel, wie längerkettige Paraffinkohlenwasserstoffe, Paraffinwachse oder sogenannte Weissöle, welche unter den Bedingungen der Polymerisation wasserunlöslich und flüssig sein sollen, zugegen sein.

Schliesslich können in allen Stufen dem wässrigen Polymerisationsmedium sehr kleine Mengen (0,0001 bis 0,1 Gew.-%, vorzugsweise 0,0005 bis 0,01 Gew.-%, bezogen auf das Gewicht des wässrigen Polymerisationsmediums) von nicht-fluorhaltigen und nicht-polymerisierbaren Kettenübertragungsmitteln zugegen sein. Beispielsweise seien hier genannt Wasserstoff, Propan, Chloroform, Tetrachlorkohlenstoff oder Methanol.

Die auf diese Weise nach Beendigung des Polymerisationsvorgangs in Stufe C) erhaltene modifizierte Polytetrafluorethylen-Dispersion kann nach üblichen und bekannten Verfahren koaguliert werden. Dies kann erfolgen beispielsweise durch mechanische Koagulierung mit Hilfe eines schnelllaufenden Rührers oder durch Versprühen unter Druck. Ebenso lassen sich die gewonnenen Dispersionen beispielsweise durch Zusatz von Säuren oder Elektrolyten ausfällen. Das so erhaltene feuchte Koagulat-Pulver wird in üblicher Weise bei Temperaturen von ca. 30 bis ca. 250° C, vorzugsweise von ca. 50 bis 180° C, getrocknet. Dieses so koagulierte Fluorpolymeren-Harzpulver, das dadurch gekennzeichnet ist, dass es aus agglomerierten Primärteilchen besteht, wobei die Agglomerate einen mittleren Teilchendurchmesser von 200 bis 800 µm, vorzugsweise von 350 bis 700 µm, besitzen, und dass seine Primärteilchen den oben definierten Dreischalenaufbau aufweisen, stellt einen weiteren Gegenstand der Erfindung dar. Dieses koagulierte Fluorpolymer-Harz ist das verbesserte Verarbeitungsmaterial für das Pastenextrusionsverfahren.

Den erfindungsgemässen wässrigen, kolloidalen Fluorpolymeren-Dispersionen mit mehrschaligem Teilchenaufbau können Füllstoffe und Pigmente hinzugefügt werden, wie sie dem Fachmann für Fluorpolymeren-Dispersionen bekannt, wenn dies für den vorgesehenen Anwendungszweck von Vorteil ist. Aus der grossen Zahl der dem Fachmann zur Verfügung stehenden Füllstoffe und Pigmente seien hier beispielhaft erwähnt Metallpulver aus reinen Metallen wie zum Beispiel Kupfer, Aluminium oder Eisen oder Legierungen wie Bronze; Verbindungen von Metallen wie beispielsweise deren Oxide oder Sulfide; Nichtmetalle und Nichtmetallverbindungen wie Graphit, Russ, Siliciumdioxid, Glasfasern, Talkum und Glimmer. Die genannten Füllstoffe können mit den erfindungsgemässen Fluorpolymeren-Dispersionen gemeinsam koaguliert werden, wobei zweckmässig ein kationenaktives Mittel, wie beschrieben in der US-PS 3793287, zugegen ist oder der Füllstoff in geeigneter und bekannter Weise vorbehandelt wird. Es ist auch möglich, Füllstoffe und Pigmente im bereits koagulierten Harz trocken beizumischen.

Die oben beschriebenen erfindungsgemässen schalenmodifizierten Tetrafluorethylen-Polymerisate weisen eine Reihe überraschender Vorteile auf, die sie für den Einsatz auf den im folgenden beschriebenen Anwendungsgebieten besonders geeignet machen:

Die Herstellung von Formkörpern nach dem herkömmlichen Pastenextrusionsverfahren erfordert beim Einsatz der erfindungsgemässen Tetrafluorethylen-Polymerisate selbst bei sehr hohen Reduktionsverhältnissen (bis 4000:1) wesentlich niedrigere Extrusionsdrücke, wobei die Extrusion

ausserordentlich gleichförmig verläuft und ein gut orientiertes Extrudat mit hohen Festigkeiten und glatten Oberflächen resultiert. Eine Reduzierung des Extrusionsdruckes bei hohen Reduktionsverhältnissen ist für die Verarbeitung von erheblichem Vorteil, da die Verarbeitungswerkzeuge (Vorform und Düsen) nicht mehr auf extrem hohe Drücke ausgelegt werden müssen. Bei der weit verbreiteten Verarbeitung zu ungesinterten Bändern mit Hilfe des Pastenextrusionsverfahrens wird die unerwünschte Steifigkeit solcher Bänder vermieden oder herabgesetzt.

Ferner besitzen die erfindungsgemässen, oben beschriebenen schalenmodifizierten Tetrafluorethylen-Polymerisate eine überragende Eigenschaftskombination von niedriger Standarddichte (SSG = Standard Specific Gravity), ausgezeichneter Thermostabilität und guter Verschmelzbarkeit der Oberfläche des Korns. Diese Eigenschaften machen sie geeignet zum Einsatz für die üblicherweise nur mit Suspensionspolymerisaten durchführbare Herstellung von Formteilen nach der sogenannten Press-Sinter-Technik oder nach dem Ram-Extrusionsverfahren. Dabei lassen sich die primär anfallenden wässriger Dispersionen besonders gut in rieselfähige Pulver mit hohem Schüttgewicht überführen, und zwar bevorzugt nach einem Verfahren, wie es in der deutschen Patentansmeldung P 2949908.9 beschrieben wird. Bei diesem Verfahren wird die in ein rieselfähiges Pulver zu überführende Polymer-Dispersion zunächst auf einen Feststoffgehalt von etwa 5 bis 15 Gew.-% eingestellt, dann bei 10 bis 85° C mit einer Energie von 4 bis etwa 200 $Js^{-1}\,1^{-1}$, gegebenenfalls unter Zugabe von bis zu 2 Gew.-%, bezogen auf die Dispersion eines wasserlöslichen dissoziierenden anorganischen Salzes, das ein Ammoniumkation oder ein Metallkation enthält und/oder von einer wasserlöslichen Säure, womit der pH-Wert der Dispersion auf 0 bis 6 eingestellt wird, bis zu einer ausreichenden Verdickung der Dispersion, angezeigt durch deutlich sichtbare optische Inhomogenitäten, gerührt, und sodann 0 bis 10 Minuten danach ohne zwischenzeitliche Abscheidung, Trocknung und Mahlung des Polymeren 1 bis 5 Gew.-%, bezogen auf die Dispersion, einer organischen Flüssigkeit, die die Dispersionsteilchen benetzt und zu weniger als 15 Gew.-% in Wasser bei 20° C löslich ist, zugegeben und unter den genannten Bedingungen bis zur Bildung eines Granulats weitergerührt. In Form der so entstandenen rieselfähigen Pulver mit hohem Schüttgewicht entsteht ein Produkt, das für die heute benutzten automatischen Beschickungsmaschinen, insbesondere bei der Ramextrusion, hervorragend geeignet ist.

Weiterhin besitzen die erfindungsgemässen schalenmodifizierten Tetrafluorethylen-Polymerisate, wie sie oben beschrieben worden sind, bei Anwendung in Form von Dispersionen für die Tränkung von Geweben, wie zum Beispiel Glasfasergeweben oder auch als Feinpulver zur Einlagerung in eine solche Tränkungsschicht, eine verringerte Porosität bei gleichzeitig erhöhter mechanischer Festigkeit, wobei wiederum die ausgezeichnete Thermostabilität ein zusätzlicher Vorteil ist.

Schliesslich stellen die erfindungsgemässen schalenmodifizierten Tetrafluorethylen-Polymerisate ein Material dar, das bei niedrigen Reduktionsverhältnissen zu Strängen nach dem Pastenextrusionsverfahren verformt und anschliessend zu ungesinterten Bändern kalandriert und gegebenenfalls verstreckt werden kann, wobei sich die unverstreckten Bänder wiederum zu porösen Erzeugnissen unter Anwendung hoher Reckverhältnisse und Reckgeschwindigkeiten verstrecken lassen. Dabei werden die mechanischen Eigenschaften (Reissfestigkeit, Reissdehnung) dieser Erzeugnisse erheblich verbessert.

Die nachfolgenden Beispiele sollen die Erfindung erläutern:

1a) *Herstellung der Saatdispersion gemäss Stufe A (Beispiele 1 bis 30, 32 bis 44)*

In einem Polymerisationsautoklaven mit einem Leervolumen von 47 l (emailliert und mit einem Impellerrührer ausgestattet) werden 31 l entionisiertes Wasser, 0,75 $cm^3$ 2 gew.-%iger wässriger Kupfer-(II)-sulfatlösung, 27,5 g Perfluoroctansäure und 37,5 $cm^3$ 18 gew.-%iger wässriger Ammoniaklösung eingebracht, sodann werden nach mehrmaliger Stickstoffspülung gegen einen schwachen Tetrafluorethylenstrom die in Tabelle I angegebenen Mengen an Modifizierungsmittel für Stufe A (siehe Spalte 2 und 3), bezogen auf die Menge an verbrauchtem Tetrafluorethylen, bis zum angestrebten Feststoffgehalt, flüssig oder gasförmig je nach Aggregatzustand, nachdosiert. Danach wird der Druck durch Zuführung von Tetrafluorethylen auf 13 bar erhöht, durch weitere Zufuhr bei 13 bar gehalten und die Polymerisation durch Nachdosieren von 1,2 g Natriumhydrogensulfit und 1,15 g Ammoniumpersulfat (in Form wässriger Lösungen) unter Rühren gestartet. Polymerisiert wird bei einer Temperatur von 35° C bis zu einem Feststoffgehalt der kolloidalen Dispersion von 10 Gew.-%, in Beispiel 33 von 15 Gew.-%, bezogen auf wässriges Medium.

1b) *Polymerisationsstufe B und C (Beispiele 1 bis 30, 32 bis 44)*

In einem gleichartigen 47-l-Polymerisationsautoklaven werden 31 l entionisiertes Wasser, 27,3 g Perfluoroctansäure, 37,5 $cm^3$ Ammoniak (18 gew.-%ige Lösung in Wasser), 0,93 $cm^3$ wässrige Kupfer-(II)-sulfatlösung (2 gew.-%ig) und 6,6 kg wässrige, kolloidale Saatdispersion gemäss Stufe A (Feststoffgehalt 10 Gew.-%, in Beispiel 33 15 Gew.-%) vorgelegt.

Nach mehrmaliger Stickstoffspülung wird durch Zuführung von Tetrafluorethylen der Druck auf 13 bar erhöht, durch weitere Zufuhr bei 13 bar gehalten und die Polymerisation durch Nachdosieren von 1,37 g Natriumhydrogensulfit und 2,18 g Ammoniumpersulfat in wässrigen Lösungen unter Rühren gestartet. Polymerisiert wird bei einer Temperatur von 28° C. Nach Erreichen des in Spalte 7 von Tabelle I angegebenen Umsetzungs-

grades, der auf den Gesamtverbrauch von Tetrafluorethylen in Stufen B und C bis zum angestrebten Feststoffgehalt bezogen ist, wird das in Spalte 5 genannte Modifizierungsmittel in der in Spalte 6 genannten Menge, bezogen auf verbrauchtes Tetrafluorethylen, in Stufe C bis zum angestrebten Endfeststoffgehalt zugeschleust. Ferner wird das in Spalten 9 bis 11 genannte Dispersionsstabilisierungsmittel hinzugefügt, entweder beim genannten Umsetzungsgrad des Tetrafluorethylens oder als Vorlage zu Beginn der Stufe B (DEG = Diethylenglykol, Dioxan=1,4-Dioxan). Ferner ist in Tabelle I der Einbau, das heisst der Anteil des Modifizierungsmittels, im Teilchenkern a) und der äusseren Teilchenhülle c) (Bestimmungsmethode siehe Abschnitt 3) sowie der Anteil des durch die Saat gebildeten Teilchenkerns am Gesamtpolymerisat angegeben (Spalte 4, 8 und 12). Der Anteil des durch die Saat gebildeten Teilchenkerns ergibt sich aus dem Gewichtsanteil des vorgelegten Saatpolymerisats in der Gewichtsmenge des Gesamtpolymerisats.

Die Beispiele 10 bis 13 sind in allen Stufen in einem Autoklaven mit 188 l Leervolumen durchgeführt worden. Hier sind die Einsatzmengen der obigen Rezeptur mit dem Faktor 4 zu multiplizieren.

In den Beispielen 24 bis 30 und 32 werden 96 mg Ammoniumpersulfat und 23 mg Azodicarbonamid in wässrigen Lösungen als Redoxkatalysator eingesetzt.

In Beispiel 32 werden zu Beginn der Stufe B 60 ppm Methanol als Kettenübertragungsmittel hinzugefügt. Die Enddispersionen der Beispiele 26, 28 und 29 werden auf einen Endfeststoffgehalt (Stufe B und C) von 16, 17 bzw. 17, in allen übrigen Beispielen von 20 Gew.-% polymerisiert.

2) *Arbeitsweise für Beispiel Nr. 31*

Wie unter 1a) beschrieben, wird zunächst eine kolloidale Dispersion mit einem Feststoffgehalt von 10 Gew.-% mit den genannten Mengen an Wasser, Zusatzstoffen und unter den dort genannten Bedingungen hergestellt (Temperatur hier 28° C, Art und Menge des Modifizierungsmittels siehe Tabelle I). Nach Entspannung des Polymerisationskessels wird einmal mit Tetrafluorethylen gespült und der Druck unter Rühren mit der bei der Polymerisation üblichen Rührgeschwindigkeit durch Zuführung von Tetrafluorethylen wieder auf 13 bar erhöht und durch weitere Zufuhr bei 13 bar gehalten.

Gleichzeitig mit der Druckerhöhung werden 0,31 g Diethylenglykol in wässriger Lösung mittels einer Dosierpumpe der Dispersion zugeführt. Polymerisiert wird bei einer Temperatur von 28° C. Nach Erreichen von 75% Umsatz, bezogen auf den Tetrafluorethylenverbrauch in Stufe B und C, wird das Modifizierungsmittel (siehe Tabelle I) zudosiert. Darauf wird bis zur Erreichung eines Feststoffgehaltes der Dispersion von 20 Gew.-% weiterpolymerisiert.

Tabelle I

*Herstellung und Zusammensetzung von Dreischalenprodukten*

| Beispiel Nr. | Modifizierungsmittel Stufe A | Modifizierungsmittel 10Vorlage / Einbau a) Gew.-% | | Polymerisationsstufe B und C: Modifizierungsmittel Stufe C | Zuschleusung Gew.-% / Umsatz (%) | | Äussere Hülle c) Einbau Gew.-% | Stabilisierungsmittel Art | Menge (ppm) | Umsatz (%) | Saat-polymerisat bezogen auf Gesamt-polymerisat Gew.-% |
|---|---|---|---|---|---|---|---|---|---|---|---|
| 1 | $CF_3-CF=CF_2$ | 2,3 | 0,8 | $CF_3-CF=CF_2$ | 4,0 | 75 | 0,3 | — | — | — | 8,4 |
| 2 | $CF_3-CF=CF_2$ | 2,3 | 0,8 | $CF_3-CF=CF_2$ | 4,0 | 75 | 0,2 | DEG | 20 | Vorlage | 8,4 |
| 3 | $CF_3-(CF_2)_2-OCF=CF_2$ | 1,1 | 0,2 | $CF_3-CF=CF_2$ | 4,0 | 75 | 0,3 | — | — | — | 8,4 |
| 4 | $CF_3-(CF_2)_2-OCF=CF_2$ | 1,1 | 0,2 | $CF_3-CF=CF_2$ | 4,0 | 75 | 0,2 | DEG | 20 | Vorlage | 8,4 |
| 5 | $CF_2=CFCl$ | 1,1 | 1,0 | $CF_3-CF=CF_2$ | 4,0 | 75 | 0,2 | — | — | — | 8,4 |
| 6 | $CF_2=CFCl$ | 1,1 | 1,0 | $CF_3-CF=CF_2$ | 4,0 | 75 | 0,2 | DEG | 20 | Vorlage | 8,4 |
| 7 | $CF_3CF=CF_2$ | 2,7 | 0,9 | $CF_3-CF=CF_2$ | 4,0 | 75 | 0,2 | DEG | 20 | 75 | 8,4 |
| 8 | $CF_3-(CF_2)_2-OCF=CF_2$ | 1,1 | 0,2 | $CF_3-CF=CF_2$ | 4,0 | 75 | 0,2 | DEG | 20 | 75 | 8,4 |
| 9 | $CF_2=CFCl$ | 1,1 | 1,0 | $CF_3-CF=CF_2$ | 4,0 | 75 | 0,2 | DEG | 20 | 75 | 8,4 |
| 10 | $CF_3-CF=CF_2$ | 2,2 | 1,0 | $CF_3-CF=CF_2$ | 0,7 | 25 | 0,3 | DEG | 20 | 25 | 8,4 |
| 11 | $CF_3-CF=CF_2$ | 2,2 | 1,0 | $CF_3-CF=CF_2$ | 1,0 | 50 | 0,3 | DEG | 20 | 50 | 8,4 |
| 12 | $CF_3-CF=CF_2$ | 2,2 | 1,0 | $CF_3-CF=CF_2$ | 1,3 | 62 | 0,4 | DEG | 20 | 62 | 8,4 |
| 13 | $CF_3-CF=CF_2$ | 2,2 | 1,0 | $CF_3-CF=CF_2$ | 2,0 | 75 | 0,6 | DEG | 20 | 75 | 8,4 |
| 14 | $CF_2-CF=CF_2$ | 2,2 | 1,0 | $CF_2-(CF_2)_2-OCF=CF_2$ | 2,0 | 75 | 0,1 | DEG | 20 | 75 | 8,4 |
| 15 | $CF_3-CF=CF_2$ | 1,7 | 0,8 | $CF_3-CF=CF_2$ | 2,4 | 50 | 0,5 | DEG | 20 | 50 | 8,4 |
| 16 | $CF_3CF=CF_2$ | 1,7 | 0,8 | $CF_3-CF=CF_2$ | 2,4 | 50 | 0,5 | DEG | 20 | 50 | 9,6 |
| 17 | $CF_3CF=CF_2$ | 1,7 | 0,8 | $CF_3-CF=CF_2$ | 2,4 | 50 | 0,3 | DEG | 20 | 50 | 10,8 |
| 18 | $CF_3CF=CF_2$ | 2,2 | 1,1 | $CF_3-CF=CF_2$ | 2,1 | 62 | 0,3 | DEG | 40 | 62 | 8,4 |
| 19 | $CF_3-CF=CF_2$ | 2,2 | 1,1 | $CF_3-CF=CF_2$ | 2,1 | 62 | 0,3 | DEG | 60 | 62 | 8,4 |
| 20 | $CF_3-CF=CF_2$ | 2,2 | 1,1 | $CF_3-CF=CF_2$ | 2,1 | 62 | 0,4 | DEG | 80 | 62 | 8,4 |
| 21 | $CF_3-CF=CF_2$ | 10 | 2 | $CF_2-CF=CF_2$ | 2,1 | 62 | 0,4 | DEG | 20 | 62 | 8,4 |
| 22 | $CF_3-CF=CF_2$ | 2,2 | 1,0 | $CF_2-CF=CF_2$ | 2,0 | 75 | 0,6 | DEG | 20 | 75 | 8,4 |

Tabelle I (Fortsetzung)

| Beispiel Nr. | Modifizierungsmittel Stufe A | Modifizierungsmittel Vorlage / Einbau a) Gew.-% | | Polymerisationsstufe B und C: Modifizierungsmittel Stufe C | Zuschleusung Gew.-% / Umsatz (%) | | Äussere Hülle c) Einbau Gew.-% | Stabilisierungsmittel Art | Menge (ppm) | Umsatz (%) | Saat-polymerisat bezogen auf Gesamt-polymerisat Gew.-% |
|---|---|---|---|---|---|---|---|---|---|---|---|
| 23 | $CF_3-CF=CF_2$ | 2,2 | 1,0 | $CF_3-(CF_2)_2-O-CF=CF_2$ | 20 | 75 | 1,6 | DEG | 30 | Vorlage | 8,4 |
| 24 | $CF_3-CF=CF_2$ | 2,2 | 0,6 | $CF_3-CF=CF_2$ | 200 | 98,5 | 10,0 | Dioxan | 20 | Vorlage | 7,2 |
| 25 | $CF_3-CF=CF_2$ | 2,8 | 0,9 | $CF_3-CF=CF_2$ | 20 | 96 | 4,0 | DEG | 20 | Vorlage | 7,2 |
| 26 | $CF_3-CF=CF_2$ | 2,2 | 0,6 | $CF_3-CF=CF_2$ | 5,0 | 80 | 1,0 | Dioxan | 20 | Vorlage | 11,0 |
| 27 | $CF_3-CF=CF_2$ | 2,2 | 0,6 | $CF_3-CF=CF_2$ | 5,0 | 96 | 0,6 | Dioxan | 20 | Vorlage | 7,2 |
| 28 | $CF_3-CF=CF_2$ | 2,2 | 0,6 | $CF_2=CH_2$ | 16,0 | 95 | 8,0 | Dioxan | 20 | Vorlage | 8,9 |
| 29 | $CF_3-CF=CF_2$ | 2,2 | 0,6 | $CF_2=CFCl$ | 26,7 | 97 | 12,5 | Dioxan | 20 | Vorlage | 9,0 |
| 30 | $CF_3-CF=CF_2$ | 2,2 | 0,6 | $CF_3(CF_2)_2OCF=CF_2$ | 13,3 | 97 | 1,6 | Dioxan | 20 | Vorlage | 7,2 |
| 31 | $CF_2=CFCl$ | 2,9 | 2,6 | $CF_3-CF=CF_2$ | 2,4 | 75 | 0,6 | DEG | 10 | 45 | 45 |
| 32 | $CF_3-CF=CF_2$ | 2,2 | 0,6 | $CF_3-CF=CF_2$ | 20 | 96 | 0,7 | DEG | 20 | Vorlage | 7,2 |
| 33 | $CF_3-CF=CF_2$ | 1,8 | 1,4 | $CF_3-CF=CF_2$ | 1,3 | 62 | 0,3 | Dioxan | 20 | 62 | 11,8 |
| 34 | $CF_3-CF=CF_2$ | 30 | 4,5 | $CF_3-CF=CF_2$ | 1,3 | 62 | 0,3 | Dioxan | 20 | 62 | 8,4 |
| 35 | $CF_2=CFCl$ | 2,9 | 2,7 | $CF_2=CFCl$ | 10,0 | 96 | 3,5 | DEG | 20 | Vorlage | 7,7 |
| 36 | $CF_2=CFCl$ | 3,2 | 3,0 | $CF_2=CFCl$ | 2,0 | 96 | 1,5 | DEG | 20 | Vorlage | 7,2 |
| 37 | $CF_2=CFCl$ | 1,4 | 1,3 | $CF_2=CFCl$ | 2,0 | 96 | 1,5 | DEG | 20 | Vorlage | 8,4 |
| 38 | $CF_2=CFCl$ | 1,4 | 1,3 | $CF_2=CFCl$ | 5,0 | 96 | 3,4 | DEG | 20 | Vorlage | 8,4 |
| 39 | $CF_2=CH_2$ | 0,5 | 0,5 | $CF_2=CFCl$ | 5,0 | 96 | 4,5 | DEG | 20 | Vorlage | 8,4 |
| 40 | $CF_2=CH_2$ | 0,5 | 0,5 | $CF_2=CH_2$ | 2,5 | 96 | 2,4 | DEG | 20 | Vorlage | 8,4 |
| 41 | $CF_2=CFCl$ | 1,4 | 1,3 | $CF_2Cl-CF_2-O-CF=CF_2$ | 10 | 96 | 1,5 | DEG | 20 | Vorlage | 8,4 |
| 42 | $CF_2=CFCl$ | 1,4 | 1,3 | $HCF_2(CF_2)_2-O-CF=CF_2$ | 10 | 96 | 1,3 | DEG | 20 | Vorlage | 8,4 |
| 43 | $CFH=CF_2$ | 0,6 | 0,5 | $CFH=CF_2$ | 2,5 | 96 | 2,2 | DEG | 20 | Vorlage | 8,4 |
| 44 | $CF_2=CFCl$ | 1,4 | 1,3 | $CF_3-O-CF=CF_2/CF_2=CFCl$ (25:75 Gew.-%) | 10 | 96 | 1,8 | DEG | 20 | Vorlage | 8,4 |

3) *IR-Bestimmung des Gehaltes an Modifizierungsmittel (IR-Spektrometer PE 137, NaCl-Prisma)*

3.1. *Trifluorchlorethylen*

Der Gehalt an Trifluorchlorethylen im Saatpolymerisat wird aus der Nettoabsorption der Bande bei 957 $cm^{-1}$ durch Vergleich mit der Nettoabsorption der Bande bei 2360 $cm^{-1}$ bestimmt. Aus dem Intensitätsverhältnis beider Banden ergibt sich direkt der Chlortrifluorethylen-Gehalt.

3.2. *Perfluorpropen*

Der Gehalt an Perfluorpropen im Saatpolymerisat wird durch Messung der Nettoabsorption der Bande bei 982 $cm^{-1}$ bestimmt. Der erhaltene Quotient wird mit 4,5 multipliziert.

Der Gehalt an Perfluorpropen in der Hülle wird nach der folgenden Methode ermittelt:

a) Bestimmung des Perfluorpropen-Gehaltes im Dreischalenprodukt.

b) Abzug des auf den Saatkern entfallenden Perfluorpropen-Gehaltes (siehe Tabelle I, Saatkern: X Gew.-% des Endpolymerisats), der an der Saat getrennt bestimmt wird.

c) Zur Umrechnung auf den Hüllengehalt muss der nach obiger Methode ermittelte Perfluorpropen-Gehalt mit dem nachfolgenden Korrekturfaktor multipliziert werden.

Hüllenfaktor = [100-(Gew.-% Saatpolymerisat, bezogen auf Endpolymerisat)]/[100% Umsatz bei Zuschleusung]

3.3 *Perfluor(propylvinyl)ether*

Für die Gehaltsbestimmung wird die Nettoabsorption der Bande bei 995 $cm^{-1}$ mit der Nettoabsorption der Bande bei 2360 $cm^{-1}$ verglichen. Durch Multiplikation des erhaltenen Quotienten mit 0,95 wird der Gehalt ermittelt. Für die Bestimmung des Perfluor(propylvinyl)ether-Hüllengehalts gilt die Korrekturmethode analog 3.2.

3.4. *Bestimmung von Perfluor(propylvinyl)ether neben Perfluorpropen (HFP)*

Sind beide Comonomere in einem Produkt gleichzeitig anwesend, so wird wegen der Überlappung der Banden von Perfluorpropen (982 $cm^{-1}$) und Perfluor(propylvinyl)ether (995 $cm^{-1}$), die in der US-PS 4029863 angegebene Kompensationsmethode unter Verwendung von TFE/HFP-Copolymerfolien gleicher Stärke angewandt. Der Hüllenanteil ergibt sich auch hier durch anschliessende Multiplikation mit dem obengenannten Hüllenfaktor.

3.5 *Vinylidenfluorid, Trifluorethylen, Chlortetrafluorethylperfluorvinylether und ω-Hydrohexafluorpropylperfluorvinylether* werden gaschromatographisch im Restgas des Polymerisationsansatzes bestimmt.

4) *Aufarbeitung für den Einsatz als Pastenextrusionsmaterial*

Die erhaltene 20 %ige Dispersion wird auf 10 Gew.-% Feststoffgehalt verdünnt und bei 35° C in einem 100- l-Glasgefäss mit einem dreiblättrigen Propellerrührer ausgerührt. Nach dreimaliger Wäsche mit jeweils 60 l entionisiertem Wasser wird das Pulver bei 130° C (Beispiel 22 180° C) getrocknet.

5) *Strangextrusion nach dem Pastenextrusionsverfahren (Tabelle II und III)*

Das Extrusionsverhalten wird durch die nachfolgen beschriebene Prüfmethode bestimmt:

Zunächst werden 220 g des im jeweilligen Beispiel erhaltenen Polymerisats, das gemäss 4) koaguliert und getrocknet worden war, mit 48,3 g eines Kohlenwasserstoffgemisches (Testbenzin, Siedebereich 190 bis 260° C) gemischt, die Mischung anschliessend bei 23° C 20 Minuten mit 100 U/min in einem zylindrischen Gefäss (500 $cm^3$) auf dem Walzenstuhl gerollt und über Nacht stehengelassen. Die homogenisierte Mischung wird bei 4 bar mit Hilfe einer Kolbenpresse zu einem zylindrischen Vorpressling (Länge 40 cm; Durchmesser 3 cm) verformt und mit einer Geschwindigkeit von 20 mm/min mit Hilfe eines Kolbenvorschubs über ein konisch geformtes Übergangsstück in eine zylindrische Düse (für Reduktionsverhältnis 1600:1, konischer Öffnungswinkel 60°, Länge 32 mm, Durchmesser 0,8 mm; für Reduktionsverhältnis 4000:1 konischer Öffnungswinkel 30°, Länge 32 mm, Durchmesser 0,5 mm) extrudiert. Die Qualität des Extrudats wird nach folgender Skala beurteilt:

Note 1 = völlig glatte Oberfläche
Note 2 = leicht wellige Oberfläche
Note 3 = wellige Oberfläche
Note 4 = diskontinuierliches Extrudat

Der Druckverlauf wird über einen Schreiber registriert und nach Einstellung eines konstanten Niveaus abgelesen.

6) *Drahtextrusion nach dem Pastenextrusionsverfahren (Tabelle II und III)*

Die Extrusion von elektrischen Leitern wird durchgeführt mit einem Jennings-Drahtextruder, Modell CEB 233-05. Der Düsendurchmesser beträgt beim Reduktionsverhältnis 1450:1 1,47 mm, beim Reduktionsverhältnis 2670:1 0,965 mm. Unter dem Reduktionsverhältnis (RV) bei der Extrusion von ummantelten elektrischen Leitern wird verstanden das Flächenverhältnis

$$\frac{\text{Vorform Querschnittsfläche}}{\text{Düsenöffnungsquerschnittsfläche} - \text{Leiterquerschnittsfläche}}$$

Verwendet wird (bei RV 1450:1) ein siebenadriger, versilberter Kupferdraht (Silberauflage 2 μ) nach der AWG-Norm Nr. 22 (= American Wire Gauge) mit einem Gesamtleiterdurchmesser von 0,76 mm. Bei RV 2670:1 wird ein einadriger, versilberter Kupferdraht (AWG 30; Silberauflage 2 μ) mit einem Gesamtleiterdurchmesser von 0,25 mm verwendet. Als Gleitmittel dient Shell-Spezialbenzin, Siedebereich 100 bis 125° C.

Der Gleitmittelanteil beträgt 17,3 Gew.-%, bezogen auf die Mischung, in den Beispielen 39 und 41 bis 44, in allen übrigen Beispielen 18 Gew.-%. Der mit einem Druck von 90 bar vorverdichtete Vorformling aus Polymerisat und Gleitmittel (Durchmesser 50 cm, Höhe 40 cm) wird dabei in den Druckzylinder des Drahtextruders eingegeben, der Leiter durch den gebohrten Dorn, die Drahtführung und die Düse geführt. Der Draht läuft sodann zur Absaugung des Gleitmittels über eine Trockenstrecke von 4 m sowie abschliessend über eine Sinterstrecke von 6 m Länge mit ca. 280° C bis 420° C steigend angeordneten Temperaturen zu einer Aufwickelvorrichtung. Die Abzugsgeschwindigkeit beträgt 15 m/min.

Nach der Abzugsvorrichtung läuft der isolierte Leiter weiter durch das elektrische Fehlersuchgerät zur Aufwickelvorrichtung. Als elektrisches Fehlersuchgerät wird ein Durchschlagprüfgerät der Firma Richter (Debring bei Bamberg, Bundesrepublik Deutschland) Type HT 1 benutzt. Die Prüfung wird bei einer Prüfspannung von 3,5 kV (nach der VDE-Messvorschrift 0881) sowie einer Frequenz von 100 Ht durchgeführt. Es wird die Zahl der elektrischen Durchschläge pro 1000 m Länge des ummantelten Leiters registriert. Die Stärke der gesinterten Isolierung beträgt bei den Versuchen mit RV 1450: 1 250 µ, bei den Versuchen mit RV 2670: 1 200 µ.

Die Transparenz der erhaltenen Isolierungen wird nach folgender Skala bewertet:

Note 1: Isolierung völlig klar. Metallischer Leiter in Originalfarbe durchscheinend.

Note 2: Isolierung leicht getrübt. Originalfarbe des metallischen Leiters nicht mehr erkennbar.

Note 3: Isolierung weist teilweise gedeckte Stellen auf. Metallischer Leiter optisch noch erkennbar. Allgemein verstärkte Trübung.

Note 4: Über 50% der Isolierung im gedeckten Zustand. Metallischer Leiter nur noch teilweise erkennbar.

Note 5: Isolierung nahezu völlig gedeckt. Metallischer Leiter nicht mehr erkennbar.

7. *Thermostabilität und SSG-Dichte (Tabelle II und III)*

Für diese Bestimmungen werden kreisförmige Sinterplatten (Durchmesser 10 cm; Dicke 6 mm; Verpressdruck 50 bar) aus je 100 g Pulver hergestellt. Die Sinterung der Platten erfolgt durch Aufheizen auf 375° C (eine halbe Stunde), 1 Stunde Haltezeit bei 375° C und anschliessend Abkühlung um 60° C/h. An den Platten wird die SSG-Dichte nach der ASTM-Norm D-1457-66 gemessen. Die Thermostabilität wird durch 24stündige Lagerung bei 360° C und Ermittlung des Gewichtsverlustes durch Rückwaage bestimmt.

Tabelle II

*SSG-Dichte, Thermostabilität und Pastenextrusion von Dreischalenprodukten*

| Produkt des Beispiels Nr. | SSG-Dichte ($g/cm^3$) | Thermo-stabilität Gew.-Verlust (24 h, 360°) (%) | Strangextrusion RV 1600:1 Druck (bar) | Strangextrusion RV 1600:1 Beur-teilung | Strangextrusion RV 4000:1 Druck (bar) | Strangextrusion RV 4000:1 Beur-teilung | Drahtextrusion RV 1450:1 Druck (bar) | Drahtextrusion RV 1450:1 Trans-parenz Note | Drahtextrusion elektrische Durch-schläge pro 1000 m | Drahtextrusion RV 2670:1 Druck (bar) | Drahtextrusion RV 2670:1 Trans-parenz Note | Drahtextrusion elektrische Durch-schläge pro 1000 m |
|---|---|---|---|---|---|---|---|---|---|---|---|---|
| 1 | 2,176 | 0,045 | 605 | 1 | 900 | 3-4 | – | – | – | – | – | – |
| 2 | 2,210 | 0,075 | 600 | 1-2 | 860 | 2-3 | – | – | – | – | – | – |
| 3 | 2,159 | 0,030 | 608 | 1-2 | 840 | 3-4 | – | – | – | – | – | – |
| 4 | 2,209 | 0,075 | 529 | 2 | 625 | 3-4 | – | – | – | – | – | – |
| 5 | 2,182 | 0,050 | 640 | 1-2 | 840 | 3-4 | – | – | – | – | – | – |
| 6 | 2,217 | 0,090 | 575 | 1 | 943 | 2 | – | – | – | – | – | – |
| 7 | 2,187 | 0,045 | 525 | 1 | 900 | 1-2 | 530 | 1 | 0 | 850 | 1-2 | 2 |
| 8 | 2,175 | 0,030 | 530 | 1 | 850 | 1-2 | 550 | 1 | 0 | 850 | 1-2 | 1 |
| 9 | 2,195 | 0,090 | 550 | 1 | 900 | 1-2 | 570 | 1 | 0 | 920 | 1-2 | 1 |
| 10 | 2,197 | 0,090 | 640 | 1 | 1110 | 1-2 | 660 | 1 | 0 | 1000 | 1-2 | 2 |
| 11 | 2,187 | 0,075 | 515 | 1 | 940 | 1-2 | 530 | 1 | 0 | 950 | 1-2 | 1 |
| 12 | 2,194 | 0,070 | 475 | 1 | 920 | 1 | 480 | 1 | 1 | 900 | 1-2 | 2 |
| 13 | 2,186 | 0,065 | 468 | 1 | 856 | 1 | 470 | 1 | 0 | 890 | 1-2 | 2 |
| 14 | 2,163 | 0,06 | 665 | 1 | 1045 | 2 | 660 | 1 | 0 | 1100 | 2-3 | 5 |
| 15 | 2,183 | – | 654 | 1 | 1080 | 1-2 | 660 | 1 | 1 | 1100 | 1-2 | 2 |
| 16 | 2,197 | – | 625 | 1 | 1090 | 1-2 | 640 | 1 | 0 | 1080 | 1-2 | 1 |
| 17 | 2,196 | – | 671 | 1 | 1120 | 1-2 | 680 | 1-2 | 2 | 1140 | 1-2 | 1 |
| 18 | 2,191 | – | 581 | 1 | 1025 | 1-2 | 600 | 1 | 1 | 1050 | 1-2 | 2 |
| 19 | 2,193 | – | 584 | 1 | 1013 | 1-2 | 590 | 1 | 0 | 1020 | 1-2 | 0 |
| 20 | 2,200 | – | 566 | 1 | 956 | 1-2 | 570 | 1 | 2 | 980 | 1-2 | 0 |
| 21 | 2,185 | – | 615 | 1 | 1040 | 1-2 | 620 | 1 | 0 | 1050 | 1-2 | 1 |
| 22 | 2,186 | – | 520 | 1 | 885 | 1-2 | 525 | 1 | 1-2 | 900 | 1-2 | 1 |
| 33 | 2,186 | – | 520 | 1-2 | 1090 | 2 | – | – | – | – | – | – |
| 35 | 2,199 | – | 600 | 1-2 | 900 | 2 | 590 | 1 | 2 | 900 | 1-2 | 2 |
| 36 | 2,195 | 0,075 | 700 | 1-2 | 1000 | 2 | 710 | 1 | 1 | 1100 | 1-2 | 3 |
| 37 | 2,195 | 0,070 | 700 | 1-2 | 1020 | 2 | 700 | 1 | 0 | 1080 | 1-2 | 2 |
| 38 | 2,200 | 0,075 | 560 | 1-2 | 860 | 2 | 540 | 1 | 0 | 850 | 1-2 | 1 |
| 39 | 2,236 | 0,095 | 470 | 1-2 | 800 | 2 | 580 | 1-2 | 2 | 950 | 1-2 | 3 |
| 40 | 2,232 | 1,945 | 650 | 1-2 | 920 | 2 | 700 | 1-2 | 3 | 1050 | 1-2 | 4 |
| 41 | 2,206 | 0,075 | 500 | 1-2 | 850 | 2 | 680 | 1-2 | 1 | 1000 | 1-2 | 2 |
| 42 | 2,197 | 0,065 | 600 | 1-2 | 900 | 2 | 700 | 1-2 | 0 | 1000 | 1-2 | 2 |
| 43 | 2,235 | 0,090 | 600 | 1-2 | 930 | 2 | 720 | 1-2 | 2 | 1100 | 1-2 | 3 |
| 44 | 2,190 | 0,070 | 530 | 1-2 | 870 | 2 | 620 | 1-2 | 2 | 990 | 1-2 | 3 |

8) *Bandextrusion zu ungesinterten Bändern und deren Reckung (siehe Tabelle III)*

*Strangextrusion:*

Die Herstellung der Stränge erfolgt auf einem Pastenextruder der Firma Havelook unter folgenden Bedingungen:

Gleitmittel: Benzin mit Kp. 244 bis 332° C, Menge 25 Gew.-%, bezogen auf Dreischalenpolymeres
Vorformpressdruck: 30 bar
Düsendurchmesser: 11,2 mm (70 µm-Bänder)
Düsentemperatur: 50° C
Extrusionsgeschwindigkeit: ca. 1,5 m/min
Reduktionsverhältnis: 30:1 (70 µm-Bänder)

Die extrudierten Stränge werden auf Trommeln von ca. 80 cm Durchmesser aufgewickelt und möglichst bald (in der Regel nach 0,5 bis 3 Stunden) kalandriert.

*Kalandrierung*

Das Kalandrieren der Stränge zu Bändern von 70 µm Dicke erfolgt auf einem Zweiwalzenkalander der Firma Havelook unter folgenden Bedingungen:

Walzendurchmesser: 300 mm
Walzenbreite: 300 mm
Ausstoss: 34 m/min
Walzentemperatur: 50° C
Strangtemperatur: Raumtemperatur (ca. 23° C)

Die kalandrierten Bänder werden aufgespult und vom Gleitmittel befreit.

Die Entfernung des Gleitmittels erfolgt in einem Bad mit heissem Perchlorethylen (ca. 100° C), durch das das Band mit einer Geschwindigkeit von ca. 1,5 m/min gezogen wird. Im Anschluss daran werden die Bänder gereckt.

*Reckung*

Die Reckung der vom Gleitmittel befreiten Bänder erfolgt auf einer Reckanlage bei Temperaturen von 230 bis 240° C. Die Reckung erfolgt zwischen zwei Walzen, deren Drehzahlverhältnis je nach Reckverhältnis stufenlos einstellbar ist. In Tabelle III ist angegeben, bei welchem Reckverhältnis bei stufenloser Erhöhung Fehlstellen (zum Beispiel Löcher, Randspleissigkeit) oder ein völliger Abriss über die gesamte Breite erstmalig auftritt.

*Prüfmethoden*

*Reissfestigkeit*

Die Prüfung erfolgt nach ASTM-Norm D-1457/ Prüfstab nach ASTM-Norm 1708. Die Abzugsgeschwindigkeit beträgt 300 mm/min.

Längs zur Extrusionsrichtung (bzw. Kalandrierrichtung) werden 2 Werte, quer 1 Wert geprüft.

Bei der Prüfung quer zur Extrusionsrichtung wird die Kraft im Augenblick des Reissens, oder – wenn die Dehnung über 400% beträgt – die Kraft, welche bei 400% Dehnung erreicht ist, angegeben.

*Reissdehnung*

Bei der Bestimmung Reissfestigkeit längs zur Extrusionsrichtung wird das Zugdehnungsdiagramm mitgeschrieben. Hieraus wird beim Wert 60% der maximalen Reissfestigkeit auf der absteigenden Seite der Zugdehnungskurve die Dehnung abgelesen. Die Reissdehnung quer zur Extrusionsrichtung kann nicht bestimmt werden, da bei 400% Dehnung noch kein Abriss eintritt.

*Dichte*

Mit einem Stanzeisen wird ein 50×20 mm grosses Stück ausgestanzt. An diesem wird an verschiedenen Stellen die Dicke gemessen und über Volumen und Gewicht die Dichte errechnet.

Tabelle III

*SSG-Dichte, Strangextrusion und Eigenschaften extrudierter, ungesinterter Bänder*

| Produkt aus Beispiel Nr. | SSG-Dichte (g/cm³) | Thermo-stabilität Gew.-Verlust (24 h, 360°) (%) | Strangextrusion RV 580:1 Druck (bar) | Strangextrusion RV 580:1 Note | Randverlauf Note | Bandeigenschaften: Breite (ungereckt) (mm) | Bandeigenschaften: Dichte (ungereckt) (g/cm³) | Reckverhältnis Fehler (1:x) | Reckverhältnis Abriss (1:x) | Reissfestigkeit längs/quer (N/mm²) | Reissdehnung längs/quer (%) |
|---|---|---|---|---|---|---|---|---|---|---|---|
| 24 | 2,163 | 0,037 | 500 | 1 | 1-2 | 135 | 1,50 | 1:16 | 1:22 | 6,6/0,68 | 190/>400 |
| 25 | 2,159 | 0,031 | 600 | 1-2 | 1-2 | 135 | 1,44 | 1:17 | 1:22 | 6,6/0,63 | 210/>400 |
| 26 | 2,169 | 0,045 | 435 | 1-2 | 2-3 | 130 | 1,60 | 1: 9 | 1:16 | 12,0/0,87 | 204/>400 |
| 27 | 2,159 | 0,023 | 675 | 2-3 | 1-2 | 125 | 1,53 | 1:13 | 1:22 | 9,3/0,73 | 197/>400 |
| 28 | 2,172 | 0,502 | 625 | 1-2 | 1-2 | 125 | 1,48 | 1:18 | 1:22 | 8,4/0,71 | 212/>400 |
| 29 | 2,169 | 0,037 | 560 | 2 | 1-2 | 135 | 1,52 | 1:10 | 1:16 | 8,1/0,69 | 227/>400 |
| 30 | 2,155 | 0,026 | 620 | 2 | 2 | 130 | 1,69 | 1:11 | 1:18 | 11,3/0,89 | 175/>400 |
| 31 | 2,221 | — | 535 | 1-2 | 2 | 125 | 1,56 | 1: 4 | 1: 8 | 12,0/1,3 | 180/>400 |
| 32 | 2,157 | 0,035 | 600 | 2 | 2 | 135 | 1,45 | 1:16 | 1:20 | 7,0/0,75 | 200/>400 |

9) *Fällungsgranulierung für die Verwendung als Press-/Sinterpulver oder den Einsatz in der Ramextrusion*

In einem 10-l-Glasgefäss, mit Propellerrüher sowie einem Hochfrequenzrührer („Ultra-Turrax®“, Typ Lutz 4/22-640) ausgestattet, werden 4 kg kolloidale Dispersion, erhalten gemäss Beispiel 14, Tabelle I (20 Gew.-% Feststoff) auf 10 Gew.-% Feststoffgehalt verdünnt und durch Zugabe von konzentrierter Salzsäure (10 cm³) unter Rühren bei gleichzeitig laufendem Hochfrequenzrührer bei Raumtemperatur gefällt. Während sechsmaliger Wäsche mit jeweils 6 l entionisiertem Wasser lässt man den Hochfrequenzrührer dreimal jeweils eine Minute lang mitlaufen. Das so erhaltene noch feuchte, koagulierte Feinpulver wird mit 4,4 l entionisiertem Wasser versetzt. Nach Zugabe von 430 cm³ Benzin (Kp. 80 bis 110° C) wird die Drehzahl des Propellerrührers erhöht und gleichzeitig der Hochfrequenzrührer 3 Minuten lang mit eingeschaltet. Danach wird bei erniedrigter Drehzahl 1 Stunde nachgerührt. Nach Absaugung des Wassers wird das Granulat 6 Stunden bei 280° C getrocknet.

An diesem Produkt werden folgende Eigenschaften gefunden.

Schüttgewicht 870 g/l; Schälfolie aus einem Sinterblock von 1 kg besitzt keinerlei Rissbildung bis zum Durchmesser 4,9 cm, ferner besitzt diese Schälfolie eine Reissfestigkeit von 34 N/mm², eine Reissdehnung von 680% und eine elektrische Durchschlagsfestigkeit von 60 kV/mm.

Diese Werte werden wie folgt erhalten:

*Schüttgewicht*

Bestimmung nach DIN-Norm 53468

*Prüfungen an 1-kg-Sinterblöcken*

1-kg-Sinterblöcke werden durch Verpressen des Pulvers mit einem Pressdruck von 250 bar und anschliessender Sinterung (4 Stunden bei 375 bis 380° C) sowie Abkühlung (45° C/h) hergestellt. Der Durchmesser beträgt 10 cm.

*Rissbildung, mechanische Werte und elektrische Durchschlagsfestigkeit*

Die gesinterten 1-kg-Blöcke werden bis auf einen inneren Kern (Durchmesser 4,9 cm) in Form einer 200-µ-Folie geschält und der Durchmesser des ungeschälten Restblocks beim ersten Auftreten von Rissen als Mass für die Rissbildung zugrundegelegt. An den erhaltenen Schälfolien wird die Reissfestigkeit und Reissdehnung nach ASTM-Norm 1457-62 T gemessen. Die Bestimmung der elektrischen Durchschlagsfestigkeit wird nach der VDE-Vorschrift 03 03/T 2 durchgeführt.

Prüfgerät: Isolationsprüfgerät der Firma Messwandler, Bau GmbH, Bamberg, Bundesrepublik Deutschland, Form IPG 30/05; Elektroden: obere Kugel 20 mm Durchmesser, untere Platte 50 mm Durchmesser.

10) *Ramextrusion*

Ein durch Fällungsgranulierung gemäss 9)

(Produkt von Beispiel 14) und durch anschliessende Temperung (30 min, 340° C) erhaltenes angesintertes Pulver wird mit Hilfe eines Ramextruders (Sinterzonenlänge 800 mm, Temperatureinstellung in Extrusionsrichtung 380, 390, 380° C; Ausstoss 3 m/h) zu Rohren (Innendurchmesser 32 mm; Aussendurchmesser 39 mm) extrudiert. Aus den Stäben werden Plättchen von 2 mm Stärke in Extrusionsrichtung herausgefräst, aus diesen wiederum Probekörper ausgestanzt und nach ASTM 1708 Reissfestigkeit und Reissdehnung (längs) bestimmt: Rf. 22,3 N/mm²; Rd. 355%. Die Rohre werden auf 2 mm Wandstärke abgedreht, Probekörper in Extrusionsrichtung ausgestanzt und nach ASTM 1708 zur Messung der Reissfestigkeit und Reissdehnung (quer) verwendet: Rf. 20,4 N/mm²; Rd. 325%.

11) *Beschichtung von Glasgewebe*

Ein entschlichtetes Glasgewebe mit Leinenbindung und einem Flächengewicht von 300 g/mm² wird mit Hilfe einer Beschichtungsmaschine dreimal mit einer im folgenden beschriebenen Dispersion getränkt und anschliessend getrocknet. Die Fördergeschwindigkeit beträgt 0,4 m/min, die Temperatur der Trocknungszonen 319° C, 397° C und 464° C, der erzielte Auftrag etwa 200 g/m². Die eingesetzte Dispersion ist eine Mischung bestehend aus 25 kg Polytetrafluorethylen-Dispersion mit einem Feststoffgehalt von 60 Gew.-%, 1,61 kg des Produktes des Beispiels 23, Tabelle I dieser Anmeldung, gefällt in feinpulvriger Form (mittlere Teilchengrösse $d_{50}$: 15 µm), 435 g eines Nonylphenols, oxethyliert mit im Mittel 10 Ethylenoxid-Einheiten sowie 0,58 kg einer Siliconharz-Emulsion (Methylphenylpolysiloxan und 25 Gew.-% Xylol).

Die Prüfung des so erhaltenen beschichteten Glasgewebes ergab folgende Werte:

Reissfestigkeit (bestimmt nach DIN-Norm 53857) 2240 N/5 cm Breite des Streifens;

Weiterreissfestigkeit (Prüfung nach DIN-Norm 53356) 76 N.

**Patentansprüche**

1. Wässrige Polymeren-Dispersion, enthaltend kolloidale Teilchen eines teilweise modifizierten Tetrafluorethylen-Polymerisats mit einem mehrschaligen Teilchenaufbau aus Schalen unterschiedlicher Zusammensetzung, dadurch gekennzeichnet, dass die Teilchen bestehen aus

a) einem Teilchenkern, bestehend aus einem Polymerisat aus 0,05 bis 6 Gew.-% Einheiten mindestens eines modifizierenden, fluorolefinischen Comonomeren der Formeln

$a^1$) 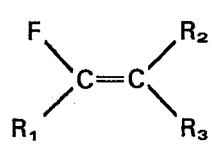 , 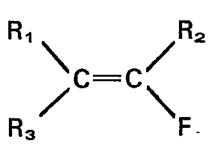 ,

worin

$R_1$ = H, Br, Cl;

$R_2$ = F, $R_f^1$, wobei $R_f^1$ einen Perfluoralkylrest mit 1 bis 4 C-Atomen bedeutet;

$R_3$ = $R_1$ oder $R_2$ ist;

$a^2$) 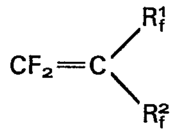 ,

worin $R_f^1$ ein Perfluoralkylrest mit 1 bis 4 C-Atomen und $R_f^2$ F oder ein Perfluormethylrest ist;

$a^3$) $R_f^3-O-CF=CF^2$, worin $R_f^3$ Perfluoralkylrest mit 1 bis 5-Atomen ist; oder

$a^4$) $R_4-O-CF=CF_2$,

worin $R_4$ ein Rest $XCF_2-(CF_2)_m-$, wobei X=H oder Cl und m eine ganze Zahl von 0 bis 4 bedeutet, ist,

und Einheiten des Tetrafluorethylens, wobei der Anteil des Teilchenkerns 2 bis 60 Gew.-% des Gesamtteilchens beträgt,

b) einer unmittelbar an den Teilchenkern anschliessenden inneren Teilchenhülle aus einem Polymerisat, bestehend ausschliesslich aus Tetrafluorethylen-Einheiten, und

c) einer unmittelbar an die innere Teilchenhülle anschliessenden äusseren Teilchenhülle aus einem Polymerisat, bestehend aus 0,1 bis 15 Gew.-% Einheiten mindestens eines modifizierenden, fluorolefinischen Comonomeren der Formeln $a^1$), $a^2$), $a^3$) und $a^4$), worin diese Formeln die unter a) definierte Bedeutung haben, und Einheiten des Tetrafluorethylens, wobei das Gewichtsverhältnis von innerer zu äusserer Teilchenhülle 25:75 bis 99,5:0,5 beträgt.

2. Wässrige Fluorpolymeren-Dispersion nach Anspruch 1, dadurch gekennzeichnet, dass der Anteil des Teilchenkerns 5 bis 50 Gew.-% des Gesamtteilchens beträgt.

3. Wässrige Fluorpolymeren-Dispersion nach Anspruch 1, dadurch gekennzeichnet, dass der Anteil des Teilchenkerns 5 bis 20 Gew.-% des Gesamtteilchens beträgt.

4. Wässrige Fluorpolymeren-Dispersion nach Anspruch 1 bis 3, dadurch gekennzeichnet, dass der Teilchenkern aus einem Polymerisat aus 0,1 bis 5 Gew.-% Einheiten des modifizierenden, fluorolefinischen Comonomeren und aus Einheiten des Tetrafluorethylens besteht.

5. Wässrige Fluorpolymeren-Dispersion nach Anspruch 1 bis 3, dadurch gekennzeichnet dass die äussere Teilchenhülle aus einem Polymerisat besteht, das aus 0,1 bis 12 Gew.-% Einheiten des modifizierenden, fluorolefinischen Comonomeren und Einheiten des Tetrafluorethylens zusammengesetzt ist.

6. Wässrige Fluorpolymeren-Dispersion nach Anspruch 1 bis 5, dadurch gekennzeichnet, dass das Gewichtsverhältnis von innerer zu äusserer Teilchenhülle 75:25 bis 99,5:0,5 beträgt.

7. Wässrige Fluorpolymeren-Dispersion nach Anspruch 1 bis 6, dadurch gekennzeichnet, dass das modifizierende, fluorolefinische Comonomere im Teilchenkern mindestens eines aus der Gruppe von Perfluorpropen, Perfluor(propylvinyl)ether, Chlortrifluorethylen und Vinylidenfluorid ist.

8. Wässrige Fluorpolymeren-Dispersion nach Anspruch 1 bis 6, dadurch gekennzeichnet, dass das modifizierende, fluorolefinische Comonomere in der äusseren Teilchenhülle mindestens eines aus der Gruppe von Perfluorpropen, Perfluor(propylvinyl)ether, Chlortrifluorethylen und Vinylidenfluorid ist.

9. Koaguliertes Fluorpolymer-Harzpulver, dadurch gekennzeichnet, dass es aus Primärteilchen-Agglomeraten mit einem mittleren Teilchendurchmesser von 200 bis 800 µm besteht und die Primärteilchen gemäss Anspruch 1 bis 8 aufgebaut sind.

10. Verfahren zur Herstellung von wässrigen Fluorpolymeren-Dispersionen, enthaltend kolloidale Teilchen eines teilweise modifizierten Tetrafluorethylen-Polymerisats mit einem mehrschaligen Teilchenaufbau aus Schalen unterschiedlicher Zusammensetzung gemäss Anspruch 1, durch Emulsionspolymerisation von Tetrafluorethylen mit modifizierenden, fluorolefinischen Comonomeren, die mit Tetrafluorethylen copolymerisierbar sind, in Gegenwart von üblichen Katalysatoren und Emulgatoren, dadurch gekennzeichnet, dass

A) zunächst eine kolloidale Saatdispersion mit einem Polymerisat-Feststoffgehalt von 3 bis 18 Gew.-%, bezogen auf das Gesamtgewicht der wässrigen Saatdispersion, durch Emulsionspolymerisation des Tetrafluorethylens und mindestens eines modifizierenden, fluorolefinischen Comonomeren der Formeln

a[1]) 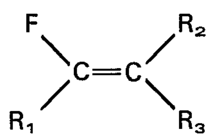 , 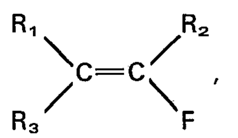 ,

worin

$R_1$ = H, Br, Cl;

$R_2$ = F, $R_f^1$, wobei $R_f^1$ einen Perfluoralkylrest mit 1 bis 4 C-Atomen bedeutet;

$R_3$ = $R_1$ oder $R_2$ ist;

a[2]) 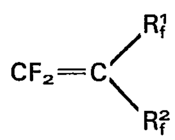 ,

worin $R_f^1$ ein Perfluoralkylrest mit 1 bis 4 C-Atomen und $R_f^2$ F oder Perfluormethylrest ist;

a[3]) $R_f^3-O-CF=CF_2$, worin

$R_f^3$ ein Perfluoralkylrest mit 1 bis 5 C-Atomen ist; oder

a[4]) $R_4-O-CF=CF_2$,

worin $R_4$ ein Rest $XCF_2-(CF_2)_m-$, wobei X=H oder Cl und m eine ganze Zahl von 0 bis 4 bedeutet, ist, hergestellt wird, wobei die Menge dieses fluorolefinischen Comonomeres so zu bemessen ist, dass der Anteil seiner Einheiten in den gebildeten Saatpartikeln 0,05 bis 6 Gew.-% beträgt;

B) sodann die Emulsionspolymerisation in Gegenwart dieser kolloidalen Saatdispersion aus Stufe A), gegebenenfalls nach Herabsetzung des Feststoffgehaltes durch Verdünnen, durch Aufpressen und Zuführung von Tetrafluorethylen unter Aufrechterhaltung eines Druckes von 5 bis 30 bar so lange fortgesetzt wird, bis ein Feststoffgehalt der Enddispersion von 8 bis 40 Gew.-% erreicht ist, wobei die Menge der anwesenden kolloidalen Saatdispersion so bemessen ist, dass die aus den Saatpartikeln entstehenden Teilchenkerne 2 bis 60 Gew.-% der Teilchen der Enddispersion ausmachen, und dabei

C) in die laufende Emulsionspolymerisation der Stufe B) bei Erreichen eines Umsetzungsgrades im Bereich von 25 bis 99,5 Gew.-%, bezogen auf den Tetrafluorethylen-Verbrauch bis zum angestrebten Feststoffgehalt der Enddispersion, mindestens ein modifizierendes, fluorolefinisches Comonomeres der Formeln $a_1$), $a^2$), $a^3$) und $a^4$), worin diese Formeln die unter A) definierte Bedeutung haben, in einer Menge zugeschleust wird, dass der Anteil seiner Einheiten in der sich bildenden äusseren Teilchenhülle 0,1 bis 15 Gew.-% beträgt.

11. Verfahren nach Anspruch 10, dadurch gekennzeichnet, dass die Emulsionspolymerisation in Stufe B) durch Zuführung von Tetrafluorethylen so lange fortgesetzt wird, bis ein Feststoffgehalt der Enddispersion von 12 bis 30 Gew.-% erreicht ist.

12. Verfahren nach Anspruch 10, dadurch gekennzeichnet, dass die Emulsionspolymerisation in Stufe B) durch Zuführung von Tetrafluorethylen so lange fortgesetzt wird, bis ein Feststoffgehalt der Enddispersion von 15 bis 25 Gew.-% erreicht ist.

13. Verfahren nach Anspruch 10 bis 12, dadurch gekennzeichnet, dass die Menge der anwesenden kolloidalen Saatdispersion in Stufe B) so bemessen wird, dass die aus den Saatpartikeln entstehenden Teilchenkerne 5 bis 55 Gew.-% der Teilchen der Enddispersion ausmachen.

14. Verfahren nach Anspruch 10 bis 12, dadurch gekennzeichnet, dass die Menge der anwesenden kolloidalen Saatdispersion in Stufe B) so bemessen wird, dass die aus den Saatpartikeln entstehenden Teilchenkerne 5 bis 50 Gew.-% der Teilchen der Enddispersion ausmachen.

15. Verfahren nach Anspruch 10 bis 14, gekennzeichnet, dass das modifizierende, fluorolefinische Comonomere in Stufe C) bei Erreichen eines Umsetzungsgrades im Bereich von 75 bis 99,5 Gew.-%, bezogen auf den Tetrafluorethylen-Verbrauch bis zum angestrebten Feststoffgehalt der Enddispersion, zugeschleust wird.

16. Verfahren nach Anspruch 10 bis 15, dadurch gekennzeichnet, dass das modifizierende, fluorolefinische Comonomere in Stufe C) in einer Menge zugeschleust wird, dass der Anteil seiner Einheiten in der sich bildenden äusseren Teilchenhülle 0,1 bis 12 Gew.-% beträgt.

17. Verfahren nach Anspruch 10 bis 16, dadurch gekennzeichnet, dass der Emulsionspolymerisation gemäss Stufe B) eine kolloidale Saatdispersion, gebildet nach Stufe A), vorgelegt wird, wobei die für die Stufe B) erforderliche Menge an Katalysator und Emulgator am Beginn der Stufe B) zugesetzt wird.

18. Verfahren nach Anspruch 10 bis 16, dadurch gekennzeichnet, dass nach Bildung der kol-

loidalen Saatdispersion gemäss Stufe A) eine Zwischenentspannung unter vollständiger Entfernung der Monomerenphase vorgenommen und die Emulsionspolymerisation dann gemäss Stufe B) fortgesetzt wird.

19. Verfahren nach Anspruch 10 bis 18, dadurch gekennzeichnet, dass die Emulsionspolymerisation der Stufe B) und C) in Gegenwart von Dispersionsstabilisierungsmitteln durchgeführt wird.

20. Verfahren nach Anspruch 19, dadurch gekennzeichnet, dass die Dispersionsstabilisierungsmittel etwa mit Beginn der Comonomeren-Zuschleusung gemäss Stufe C) zugesetzt werden.

21. Verfahren nach Anspruch 10 bis 20, dadurch gekennzeichnet, dass in mindestens einer der Stufen A), B) und C) ein nicht-polymerisierbares, nicht-fluoriertes Kettenübertragungsmittel zugegen ist.

**Revendications**

1. Dispersion aqueuse d'un polymère, contenant des particules colloïdales d'un polymère de tétrafluoréthylène partiellement modifié présentant une structure de particules en plusieurs couches de compositions différentes, dispersion caractérisée en ce que les particules consistent en:

a) un noyau de particule, consistant en un polymère formé de 0,05 à 6% en poids de motifs d'au moins un comonomère fluorooléfinique, à rôle de modification, répondant aux formules:

a[1])

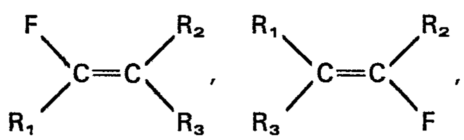

(dans lesquelles $R_1$ représente H, Br, Cl;

$R_2$ représente F, $R_f^1$, où $R_f^1$ est un radical perfluoroalkyle comportant 1 à 4 atomes de carbone;

$R_3$ représente $R_1$ ou $R_2$);

a[2])

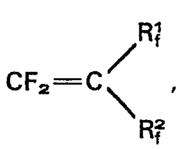

(dans laquelle $R_f^1$ est un radical perfluoroaklyle comportant 1 à 4 atomes de carbone, et $R_f^2$ représente F ou un radical perfluorométhyle);

a[3]) $R_f^3-O-CF=CF_2$ (dans laquelle $R_f^3$ est un radical perfluoroalkyle comportant 1 à 5 atomes de carbone) ou

a[4]) $R_4-O-CF=CF_2$, (dans laquelle $R_4$ représente un radical $XCF_2-(CF_2)_m-$, où X représente H ou Cl et m est un nombre entier valant 0 à 4), et des motifs de tétrafluoréthylène, la proportion du noyau des particules représentant 2 à 60% du poids de la particule totale,

b) une enveloppe interne immédiatement voisine du noyau et constituée d'un polymère consistant exclusivement en des motifs de tétrafluoréthylène, et

c) une enveloppe externe immédiatement voisine de l'enveloppe interne, formée d'un polymère consistant en 0,1 à 15% en poids de motifs d'au moins un comonomère fluorooléfinique à rôle modificateur, répondant aux formules a[1]), a[2]), a[3]) et a[4]), ces formules ayant le sens défini en a), et en des motifs de tétrafluoréthylène, le rapport pondéral de l'enveloppe interne à l'enveloppe externe se situant entre 25:75 et 99,5:0,5.

2. Dispersion aqueuse d'un polymère fluoré selon la revendication 1, caractérisée en ce que la proportion du noyau des particules représente 5 à 50% du poids de la particule globale.

3. Dispersion aqueuse d'un polymère fluoré selon la revendication 1, caractérisée en ce que la proportion du noyau des particules représente 5 à 20% du poids de la particule globale.

4. Dispersion aqueuse d'un polymère fluoré selon l'une quelconque des revendications 1 à 3, caractérisée en ce que le noyau des particules consiste en un polymère formé de 0,1 à 5% en poids de motifs du comonomère fluorooléfinique à rôle modificateur et de motifs de tétrafluoréthylène.

5. Dispersion aqueuse d'un polymère fluoré selon l'une quelconque des revendications 1 à 3, caractérisée en ce que l'enveloppe externe des particules consiste en un polymère formé de 0,1 à 12% en poids de motifs du comonomère fluorooléfinique à rôle modificateur et de motifs de tétrafluoroéthylène.

6. Dispersion aqueuse d'un polymère fluoré selon l'une quelconque des revendications 1 à 5, caractérisée en ce que le rapport pondéral de l'enveloppe interne à l'enveloppe externe se situe entre 75:25 et 99,5:0,5.

7. Dispersion aqueuse d'un polymère fluoré selon l'une quelconque des revendications 1 à 6, caractérisée en ce que le comonomère fluorooléfinique à rôle de modification présent dans le noyau des particules est constitué d'au moins l'un des composés choisis dans l'ensemble formé par le perfluoropropène, l'éther perfluoré de propyle et de vinyle, le chlorotrifluoréthylène et le fluorure de vinylidène.

8. Dispersion aqueuse d'un polymère fluoré selon l'une quelconque des revendications 1 à 6, caractérisée en ce que le comonomère fluorooléfinique à rôle modificateur présent dans l'enveloppe externe des particules est constitué par au moins l'un des composés de l'ensemble formé par le perfluoropropène, un éther perfluoré de propyle et de vinyle, du chlorotrifluoréthylène et du fluorure de vinylidène.

9. Poudre de résine de polymère fluoré coagulé, caractérisée en ce qu'elle est constituée de particules primaires agglomérées ayant un diamètre moyen de particules de 200 à 800 µm et en ce que les particules primaires sont constituées selon l'une quelconque des revendications 1 à 8.

10. Procédé de préparation de dispersions aqueuses de polymère fluoré, contenant des particules colloïdales d'un polymère de tétrafluoréthylène partiellement modifié présentant une structure de particules en plusieurs couches de compositions différentes selon la revendication 1, par polymérisation en émulsion

de tétrafluoréthylène avec des comonomères fluorooléfiniques à rôle modificateur qui sont copolymérisables avec le tétrafluoroéthylène, en présence de catalyseurs et agents usuels d'émulsification, procédé caractérisé en ce que:

A) On prépare tout d'abord une dispersion colloïdale de départ ayant une teneur en extrait sec de polymère de 3 à 18% en poids, par rapport au poids total de la dispersion aqueuse de départ, par polymérisation en émulsion du tétrafluoréthylène et d'au moins un comonomère fluorooléfinique à rôle modificateur, répondant aux formules:

a[1])

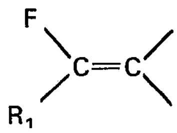

,

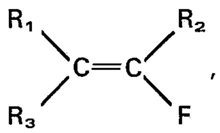

,

(dans lesquelles $R_1$ représente H, Br, Cl;

$R_2$ représente F, $R_f^1$, où $R_f^1$ est un radical perfluoroalkyle comportant 1 à 4 atomes de carbone;

$R_3$ représente $R_1$ ou $R_2$);

a[2])

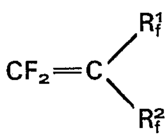

,

(dans laquelle $R_f^1$ est un radical perfluoralkyle comportant 1 à 4 atomes de carbone et $R_f^2$ représente F ou un radical perfluorométhyle);

a[3]) $R_f^3-O-CF=CF_2$ (dans laquelle $R_f^3$ est un radical perfluoroalkyle comportant 1 à 5 atomes de carbone) ou

a[4]) $R_4-O-CF=CF_2$ (dans laquelle $R_4$ représente un radical $XCF_2-(CF_2)_m-$, où X représente H ou Cl et m est un nombre entier valant 0 à 4), la quantité de ce comonomère fluorooléfinique étant mesurée de manière que la proportion de ses motifs représente 0,05 à 6% en poids dans les particules de départ formées;

B) on poursuit ensuite la polymérisation en émulsion en présence de cette dispersion colloïdale de départ provenant de l'étape A), éventuellement après diminution, par dilution de la teneur en extrait sec, par introduction sous pression de tétrafluoroéthylène et en continuant l'amenée du tétrafluoroéthylène en maintenant une pression de 5 à 30 bar jusqu'à atteindre une teneur en extrait sec de la dispersion finale de 8 à 40% en poids, en mesurant la quantité de la dispersion finale colloïdale de départ présente de manière que les noyaux des particules résultant des particules de départ représentent 2 à 60% du poids des particules de la dispersion finale, et

C) dans la polymérisation en émulsion de l'étape B) qui se poursuit, on ajoute lorsqu'est atteint un degré de réaction compris entre 25 et 99,5% en poids, par rapport à la consommation de tétrafluoréthylène jusqu'à la teneur en extrait sec visée pour la dispersion finale, au moins un comonomère fluorooléfinique à rôle modificateur, répondant aux formules a[1]), a[2]), a[3]) et a[4]) (ces formules ayant le sens défini en A), en une quantité telle que la proportion de ses motifs dans l'enveloppe externe qui se forme représente 0,1 à 15% en poids.

11. Procédé selon la revendication 10, caractérisé en ce qu'on poursuit la polymérisation en émulsion dans l'étape B) par introduction de tétrafluoréthylène jusqu'à atteindre une teneur en extrait sec de la dispersion finale de 12 à 30% en poids.

12. Procédé selon la revendication 10, caractérisé en ce qu'on poursuit dans l'étape B) la polymérisation en émulsion par introduction de tétrafluoréthylène jusqu'à atteindre une teneur en extrait sec de la dispersion finale de 15 à 25% en poids.

13. Procédé selon l'une des revendications 10 à 12, caractérisé en ce qu'on mesure la quantité de la dispersion colloïdale de départ présente dans l'étape B) de manière que les noyaux des particules provenant des particules de départ représentent 5 à 55% du poids des particules de la dispersion finale.

14. Procédé selon l'une quelconque des revendications 10 à 12, caractérisé en ce qu'on mesure la quantité de la dispersion colloïdale de départ présente dans l'étape B) de manière que les noyaux des particules résultant des particules de départ représentent 5 à 50% du poids des particules de la dispersion finale.

15. Procédé selon l'une quelconque des revendications 10 à 14, caractérisé en ce qu'on introduit le comonomère fluorooléfinique à rôle modificateur dans l'étape C) lorsqu'est atteint un degré de réaction compris entre 75 et 99,5% en poids, par rapport à la consommation de tétrafluoréthylène jusqu'à obtention de la teneur visée en extrait sec de la dispersion finale.

16. Procédé selon l'une quelconque des revendications 10 à 15, caractérisé en ce qu'on introduit le comonomère fluorooléfinique à rôle modificateur dans l'étape C) en une quantité telle que la proportion de ses motifs représente 0,1 à 12% en poids dans l'enveloppe externe des particules qui se forme.

17. Procédé selon l'une quelconque des revendications 10 à 16, caractérisé en ce qu'avant la polymérisation en émulsion selon l'étape B), on place une dispersion colloïdale de départ, formée selon l'étape A), en ajoutant au début de l'étape B) la quantité de catalyseurs et d'agents d'émulsification nécessaires pour l'étape B).

18. Procédé selon l'une quelconque des revendications 10 à 16, caractérisé en ce qu'après la formation de la dispersion colloïdale de départ selon l'étape A), on effectue une détente intermédiaire avec enlèvement complet de la phase du ou des monomères, et l'on poursuit ensuite la polymérisation en émulsion selon l'étape B).

19. Procédé selon l'une quelconque des revendications 10 à 18, caractérisé en ce qu'on effectue la polymérisation en émulsion des étapes B) et C) en présence d'agents de stabilisation de la dispersion.

20. Procédé selon la revendication 19, caractérisé en ce qu'on ajoute les agents de stabilisation de la dispersion approximativement au début de

l'introduction du ou des comonomères selon l'étape C).

21. Procédé selon l'une quelconque des revendications 10 à 20, caractérisé en ce qu'on ajoute, dans au moins l'une des étapes A), B) et C), un agent non polymérisable, non fluoré de transfert des chaînes.

## Claims

1. Aqueous polymer dispersion containing colloidal particles of a partially modified tetrafluoroethylene polymer with a multi-shell particle structure of shells of different composition, said particles being composed of

a) a particle core comprising a polymer of 0.05 to 6% by weight of units of at least one modifying fluoroolefinic comonomer of the formulae

a[1])

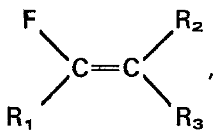

,

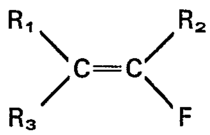

wherein $R_1$ is H, Br or Cl;

$R_2$ is F or $R_f^1$, $R_f^1$ denoting a perfluoroalkyl radical with 1 to 4 C atoms, and

$R_3$ is $R_1$ or $R_2$;

a[2])

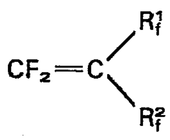

wherein $R_f^1$ is a perfluoroalkyl radical with 1 to 4 C atoms and $R_f^2$ is F or a perfluoromethyl radical;

a[3]) $R_f^3-O-CF=CF_2$ wherein $R_f^3$ is a perfluoroalkyl radical with 1 to 5 C atoms; or

a[4]) $R_4-O-CF=CF_2$ wherein $R_4$ is a radical $XCF_2-(CF_2)_m-$, in which X=H or Cl and m denotes an integer from 0 to 4, and units of tetrafluoroethylene, the proportion of the particle core being 2 to 60% by weight of the total particle;

b) an inner particle shell, immediately adjacent to the particle core, of a polymer consisting exclusively of tetrafluoroethylene units, and

c) an outer particle shell, immediately adjacent to the inner particle shell, of a polymer comprising 0.1 to 15% by weight of units of at least one modified, fluoroolefinic comonomer of the formulae a[1]), a[2]), a[3]) and a[4]), these formulae being as defined under a), and units of tetrafluoroethylene, the weight ratio of the inner particle shell to the outer particle shell being 25:75 to 99.5:0.5.

2. Aqueous fluoropolymer dispersion as claimed in claim 1, characterised in that the proportion of the particle core is 5 to 50% by weight of the complete particle.

3. Aqueous fluoropolymer dispersion as claimed in claim 1, characterised in that the proportion of the particle core is 5 to 20% by weight of the complete particle.

4. Aqueous fluoropolymer dispersion as claimed in any of claims 1 to 3, characterised in that the particle core comprises a polymer consisting of 0.1 to 5% by weight of units of the modifying fluoroolefinic comonomer and of tetrafluoroethylene units.

5. Aqueous fluoropolymer dispersion as claimed in any of claims 1 to 3, characterised in that the outer particle shell comprises a polymer being composed of 0.1 to 12% by weight of units of the modifying fluoroolefinic comonomer and tetrafluoroethylene units.

6. Aqueous fluoropolymer dispersion as claimed in any of claims 1 to 5, characterised in that the weight ratio of the inner particle shell to the outer particle shell is 75:25 to 99.5:0.5.

7. Aqueous fluoropolymer dispersion as claimed in any of claims 1 to 6, characterised in that the modifiying fluoroolefinic comonomer in the particle core is at least one comonomer from the group comprising perfluoropropene, perfluoro(propylvinyl)ether, chlorotrifluoroethylene and vinylidene fluoride.

8. Aqueous fluoropolymer dispersion as claimed in any of claims 1 to 6, characterised in that the modifying fluoroolefinic comonomer in the outer particle shell is at least one comonomer from the group comprising perfluoropropene, perfluoro(propylvinyl)-ether, chlorotrifluoroethylene and vinylidene fluoride.

9. Coagulated fluoropolymer resin powder, characterised in that it consists of agglomerates of primary particles with an average particle diameter of 200 to 800 μm, in which the primary particles are built up as claimed in any of claims 1 to 8.

10. A process for the preparation of aqueous fluoropolymer dispersions containing colloidal particles of a partially modified tetrafluoroethylene polymer with a multi-shell particle structure of shells of different compositions, as claimed in claim 1, by emulsion polymerisation of tetrafluoroethylene with modifying fluoroolefinic comonomers being copolymerisable with tetrafluoroethylene in the presence of customary catalysts and emulsifiers, which is characterised by

A) first preparing a colloidal seed dispersion with a polymer solids content of 3 to 18% by weight, relative to the total weight of the aqueous seed dispersion, by emulsion polymerisation of tetrafluoroethylene and at least one modifying fluoroolefinic comonomer of the formulae

a[1])

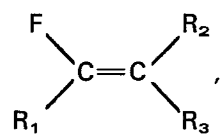

,

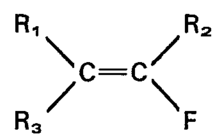

wherein $R_1$ is H, Br or Cl;

$R_2$ is F or $R_f^1$, $R_f^1$ denoting a perfluoroalkyl radical with 1 to 4 C atoms, and

$R_3$ is $R_1$ or $R_2$;

a[2])

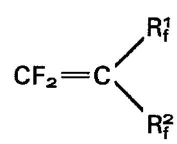

wherein $R_f^1$ is a perfluoroalkyl radical with 1 to 4 C atoms and $R_f^2$ is F or a perfluoromethyl radical;

a³) $R_f^3-O-CF=CF_2$ wherein $R_f^3$ is a perfluoroalkyl radical with 1 to 5 C atoms; or

a⁴) $R_4-O-CF=CF_2$ wherein $R_4$ is a radical $XCF_2-(CF_2)_m-$, in which X=H or Cl and m denotes an integer from 0 to 4, the amount of this fluoroolefinic comonomer being such that the proportion of its units in the seed particles formed is 0.05 to 6% by weight;

B) then continuing the emulsion polymerisation in the presence of this colloidal seed dispersion from stage A), optionally after reducing the solids content by dilution, by forcing in tetrafluoroethylene and continuing to feed in tetrafluoroethylene to maintain a pressure of 5 to 30 bar, until the solids content of the final dispersion has reached 8 to 40% by weight, the amount of colloidal seed dispersion present being such that the particle cores formed from the seed particles comprise 2 to 60% by weight of the particles of the final dispersion, and

C) feeding at least one modifying fluoroolefinic comonomer of the formulae a¹), a²), a³) and a⁴), wherein these formulae are as defined under A), into the running emulsion polymerisation of stage B) when a degree of conversion in the range from 25 to 99.5% by weight has been reached, relative to the consumption of tetrafluoroethylene up to the intended solids content of the final dispersion, the amount of the comonomer fed in being such that the proportion of comonomer units in the outer particle shell which is formed is 0.1 to 15% by weight.

11. A process as claimed in claim 10, characterised in that the emulsion polymerisation in stage B) is continued by feeding in tetrafluoroethylene until the solids content of the final dispersion reaches 12 to 30% by weight.

12. A process as claimed in claim 10, characterised in that the emulsion polymerisation in stage B) is continued by feeding in tetrafluoroethylene until the solids content of the final dispersion reaches 15 to 25% by weight.

13. A process as claimed in any of claims 10 to 12, characterised in that the amount of colloidal seed dispersion present in stage B) is chosen such that the particle cores formed from the seed particles comprise 5 to 55% by weight of the particles of the final dispersion.

14. A process as claimed in any of claims 10 to 12, characterised in that the amount of colloidal seed dispersion present in stage B) is chosen such that the particle cores formed from the seed particles comprise 5 to 50% by weight of the particles of the final dispersion.

15. A process as claimed in any of claims 10 to 14, characterised in that the modifying fluoroolefinic comonomer is fed into stage C), when a degree of conversion in the range from 75 to 99.5% by weight, relative to the tetrafluoroethylene consumption up to the intended solids content of the final dispersion is reached.

16. A process as claimed in any of claims 10 to 15, characterised in that the modifying fluoroolefinic comonomer is fed into stage C) in an amount such that the proportion of units thereof in the outer particle shell formed is 0.1 to 12% by weight.

17. A process as claimed in any of claims 10 to 16, characterised in that a colloidal seed dispersion formed according to stage A) is subjected to the emulsion polymerisation according to stage B), the amount of catalyst and emulsifier required for stage B) being added at the start of stage B).

18. A process as claimed in any of claims 10 to 16, characterised in that after forming the colloidal seed dispersion according to stage A), the mixture is intermediately vented with complete removal of the monomer phase, and the emulsion polymerisation is then continued according to stage B).

19. A process as claimed in any of claims 10 to 18, characterised in that the emulsion polymerisation in stages B) and C) is carried out in the presence of dispersion stabilising agents.

20. A process as claimed in claim 19, characterised in that the dispersion stabilising agents are added approximately at the beginning of the comonomer feed according to stage C).

21. A process as claimed in any of claims 10 to 20, characterised in that a non-polymerisable, non-fluorinated chain transfer agent is present in at least one of stages A), B) and C).